# EUROPEAN PATENT SPECIFICATION

(11) **EP 4 418 734 B1**
(45) Date of publication and mention of the grant of the patent: **18.02.2026**
(21) Application number: 22931859.7
(22) Date of filing: 14.12.2022
(51) Int. Cl.: H04W 36/00, H04B 3/04, H04W 76/12, H04W 36/02, H04W 88/14

(54) **COMMUNICATION SYSTEM FOR DATA REDUNDANCY**
KOMMUNIKATIONSSYSTEM FÜR DATENREDUNDANZ
SYSTÈME DE COMMUNICATION POUR LA REDONDANCE DES DONNÉES

(30) Priority: 17.03.2022 CN 202210265839
(43) Date of publication of application: 21.08.2024
(73) Proprietor: Honor Device Co., Ltd., Shenzhen, Guangdong 518040 (CN)
(72) Inventor: LIN, Bo, Shenzhen, Guangdong 518040 (CN)
(74) Representative: MERH-IP Matias Erny Reichl Hoffmann Patentanwälte PartG mbB
(86) International application number: PCT/CN2022/138963
(87) International publication number: WO 2023/173851

(56) References cited:
- WO-A1-2021/081785
- CN-A- 108 616 945
- CN-A- 111 771 393
- CN-A- 113 507 718
- US-A1- 2022 015 001
- INTEL CORPORATION: "Discussion on SA2 LS for CN based splitting", vol. RAN WG2, no. Xi'an, China; 20190408 - 20190412, 6 April 2019 (2019-04-06), XP051700793, Retrieved from the Internet <URL:http://www.3gpp.org/ftp/Meetings%5F3GPP%5FSYNC/RAN2/Docs/R2%2D1903448%2Ezip> [retrieved on 20190406]
- "3rd Generation Partnership Project; Technical Specification Group Radio Access Network; Evolved Universal Terrestrial Radio Access Network (E-UTRAN); X2 application protocol (X2AP) (Release 16)", vol. RAN WG3, no. V16.8.0, 23 December 2021 (2021-12-23), pages 1 - 504, XP052083399, Retrieved from the Internet <URL:https://ftp.3gpp.org/Specs/archive/36_series/36.423/36423-g80.zip 36423-g80.doc> [retrieved on 20211223]
- ERICSSON: "Corrections for CN tunnel info allocation and release", vol. SA WG2, no. Electronic Meeting; 20200224 - 20200227, 11 March 2020 (2020-03-11), XP052432154, Retrieved from the Internet <URL:https://ftp.3gpp.org/tsg_sa/TSG_SA/TSGS_87E_Electronic/Docs/SP-200079.zip 23502_CR2113r1_(Rel-16)_S2-2002427_2024r01_SM_tunnel_ID.docx> [retrieved on 20200311]
- ERICSSON: "Discussion on SA2 LS on supporting low latency and low jitter during handover procedure", 3GPP DRAFT; R2-1903532 - DISCUSSION ON SA2 LS ON SUPPORTING LOW LATENCY AND LOW JITTER DURING HANDOVER PROCEDURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Xian, China; 20190408 - 20190412, 28 March 2019 (2019-03-28), Mobile Competence Centre ; 650, route des Lucioles ; F-06921 Sophia-Antipolis Cedex ; France , XP051688602

## Description

### TECHNICAL FIELD

This application relates to the field of wireless communication, in particular to a communication method, corresponding user equipment, a base station, a core network device, and a communication system.

### BACKGROUND

In a conventional handover technology, to ensure continuity of downlink data transmission in a handover procedure, a source base station forwards a downlink service data or user data (user data) packet received from a core network to a target base station, and the downlink service data or user data packet is then sent by the target base station to a terminal. A process of forwarding data packets from the source base station to the target base station introduces delays to the forwarded data packets, and consequently, end to end (End to End, E2E) delays of these data packets are increased.

However, the increase in the E2E delays of the data packets may reduce quality of service provided by a network for the terminal. This defect is more evident especially when a service performed by the terminal is a time-sensitive service (for example, industrial control and autonomous driving).

US 2022/015001 A1 discloses a process where either a source node or a target node can request core network to initiate bicasting during the handover.

Intel Corporation: "Discussion on SA2 LS for CN based splitting", 3GPP DRAFT; R2-1903448-SA2, LS FOR CN BASED SPLITTING, 3RD GENERATION PARTNERSHIP PROJET (3GPP), MOBILE COMPETENCE CENTRE; 650, ROUTE DES LUCIOLES; F-06921 SOPHIA-ANTIPOLIS CEDEX; FRANCE, vol. RAN WG2, no. Xi'an, China; 20190408 - 20190412 6 April 2019 (2019-04-06), XP051700793, discloses allowing UPF to bi-cast DL packets to both source gNB and target gNB during handover procedure to avoid the latency introduced by forwarding tunnel over Xn/N2 interfaces.

ERICSSON: "Corrections for CN tunnel info allocation and release", 3GPP DRAFT; SP-200079, 3RD GENERATION PARTNERSHIP PROJET (3GPP), MOBILE COMPETENCE CENTRE; 650, ROUTE DES LUCIOLES; F-06921 SOPHIA-ANTIPOLIS CEDEX; FRANCE, vol. SA WG2, no. Electronic Meeting; 20200224 - 20200227 11 March 2020 (2020-03-11), XP052432154, discusses CN tunnel info allocation and release.

### SUMMARY

The invention is set out in the appended set of claims.

### BRIEF DESCRIPTION OF DRAWINGS

The foregoing and other objectives, features, and advantages of this application are clearer with reference to the detailed description of the accompanying drawings. The accompanying drawings herein are incorporated into this specification, constitute a part of this specification, and are used to explain the principles of this application together with this specification. In the accompanying drawings, same reference numerals represent same or similar elements, features, and structures.
FIG. 1 is a diagram of a wireless communication system in which an embodiment of this application can be applied;
FIG. 2 is a diagram of data packet forwarding from a source base station to a target base station in a conventional handover technology;
FIG. 3A is a time sequence diagram of a communication method for a handover scenario according to an embodiment of this application;
FIG. 3B is a diagram of sending data packets to a source base station and a target base station by a core network in a bi-casting mode in a handover procedure according to an embodiment of this application;
FIG. 4A and FIG. 4B are a time sequence diagram of another communication method for a handover scenario according to an embodiment of this application;
FIG. 5A and FIG. 5B are a time sequence diagram of still another communication method for a handover scenario according to an embodiment of this application;
FIG. 6A and FIG. 6B are a time sequence diagram of a communication method according to the present invention;
FIG. 7 is a flowchart of a method performed by a base station according to embodiments of this application;
FIG. 8 is a time sequence diagram of a communication method according to still another embodiment of this application;
FIG. 9 is a time sequence diagram of a communication method according to yet another embodiment of this application;
FIG. 10 is a diagram of a structure of a communication apparatus according to an embodiment of this application; and
FIG. 11 is a diagram of a structure of UE according to an embodiment of this application.

### DESCRIPTION OF EMBODIMENTS

The following describes the technical solutions in embodiments of the present invention with reference to the accompanying drawings in embodiments of the present invention. Apparently, the described embodiments are some of embodiments of this patent application rather than all of the embodiments. All other embodiments obtained by a person of ordinary skill in the art based on embodiments of this patent application without creative efforts shall fall within the protection scope of this patent application.

Terms such as "module" and "system" used in this specification indicate computer-related entities, hardware, firmware, combinations of hardware and software, software, or software being executed. Further, various embodiments are described with reference to a terminal. The terminal may also be referred to as terminal unit, a terminal station, a mobile station, a mobile console, a remote station, a remote terminal, a mobile device, a wireless communication device, a terminal proxy, a terminal apparatus, or user equipment (user equipment, UE). The terminal may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device, another processing device connected to a wireless modem, or the like.

Further, various embodiments are described with reference to a base station. The base station may be configured to communicate with the UE. The base station may be a BTS (Base Transceiver Station, base transceiver station) in a GSM (Global System of Mobile communication, global system for mobile communications) or CDMA (Code Division Multiple Access, code division multiple access), an RNC (Radio Network Controller, radio network controller) or NB+ (NodeB+) in WCDMA (Wideband Code Division Multiple Access, wideband code division multiple access), an evolved universal terrestrial radio access network (Evolved Universal Terrestrial Radio Access Network, E-UTRAN) device such as an evolved NodeB (evolutional NodeB, eNB or e-NodeB) in LTE, a next generation radio access network (Next Generation Radio Access Network, NG-RAN) device (for example, a gNB) in a 5G system, a relay station or an access point, a base station device in a future network, or the like.

In the specification, claims, and accompanying drawings of this application, the terms "first", "second", "third", and the like are intended to distinguish different objects but do not indicate a particular order.

In embodiments of this application, terms such as "example" or "for example" are used to represent giving examples, illustrations, or descriptions. Any embodiment or design scheme described as "example" or "for example" in embodiments of this application should not be explained as being more preferred or having more advantages than another embodiment or design scheme. To be precise, use of the terms such as "example" or "for example" is intended to present a relative concept in a specific manner.

The terms used in implementations of this application are merely intended to explain specific embodiments of this application and are not intended to limit this application. The following describes embodiments of this application in detail with reference to the accompanying drawings.

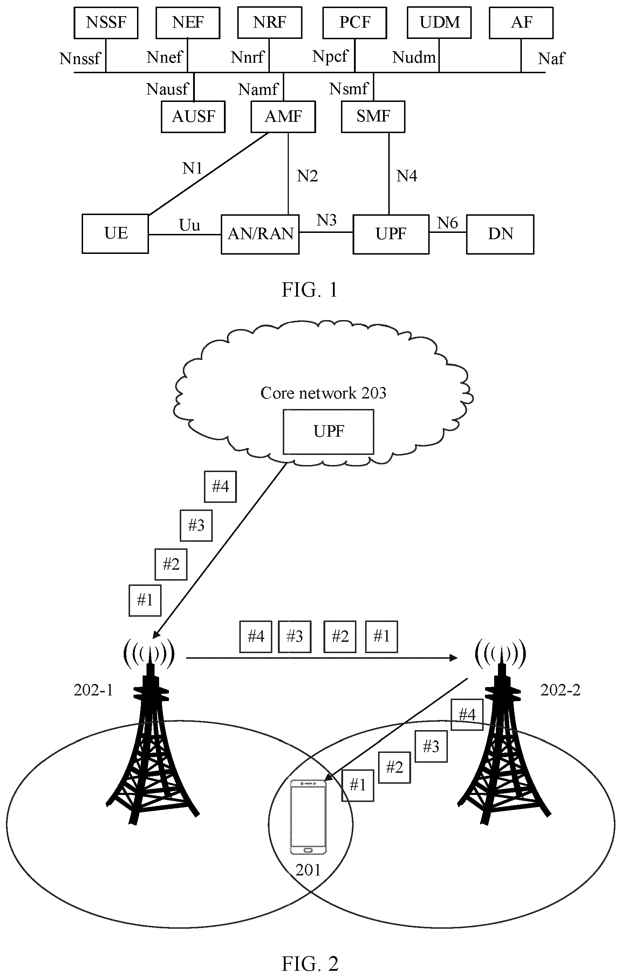

First, a wireless communication system in which embodiments of this application may be applied is described with reference to FIG. 1. FIG. 1 is a diagram of a wireless communication system in which embodiments of this application can be applied. The wireless communication system may be an LTE wireless communication system, a 5G wireless communication system, a new communication system in future wireless communication developments, or the like. Hereinafter, embodiments of this application are described by using the 5G wireless communication system as an example.

As shown in FIG. 1, an interactive relationship between network functions and entities and corresponding interfaces are illustrated by using a network service architecture of the 5G wireless communication system as an example. Network functions and entities of a service-based network architecture (service-based network architecture, SBA) of the 3rd generation partnership project (the 3rd generation partnership project, 3GPP) of the 5G wireless communication system mainly include: user equipment (User Equipment, UE), an access network (Access Network, AN) or a radio access network (Radio Access Network, RAN), a user plane function (User Plane Function, UPF), a data network (Data Network, DN), an access and mobility management function (Access and Mobility Management Function, AMF), a session management function (Session Management Function, SMF), an authentication server function (Authentication Server Function, AUSF), a policy control function (Policy Control Function, PCF), an application function (Application Function, AF), a network slice selection function (Network Slice Selection Function, NSSF), a unified data management (Unified Data Management, UDM) function, a network exposure function (Network Exposure Function, NEF), and a network repository function (Network Repository Function, NRF). A network formed by network elements other than the UE and the AN/RAN may be referred to as a core network.

A network function can be used as a network element running on dedicated hardware, or a software instance running on dedicated hardware, or a virtual function instantiated on an appropriate platform, for example, implemented on cloud infrastructure.

The main functions of the network elements are described below in detail.

AN/RAN: The AN/RAN may include various forms of base stations, for example, a macro base station, a micro base station (also referred to as a "small cell"), and a distribute unit-control unit (Distribute Unit-Control Unit, DU-CU). In addition, the base station may be a radio controller in a cloud radio access network (Cloud Radio Access Network, CRAN) scenario, a relay station, an access point, an in-vehicle device, a wearable device, a network device in a future evolved public land mobile network (Public Land Mobile Network, PLMN), or the like. Alternatively, the AN/RAN may include a broadband network service gateway (Broadband Network Gateway, BNG), an aggregation switch, a non-3GPP access device, or the like. The AN/RAN is mainly responsible for functions such as radio resource management on an air interface side, uplink and downlink data classification, quality of service (quality of service, QoS) management, data compression and encryption, completion of signaling processing with a control plane network element, or completion of data forwarding with a user plane network element. The specific form and structure of the AN/RAN are not limited in embodiments of this application. For example, in systems using different radio access technologies, names of devices having a base station function may be different. For example, the base station may be an E-UTRAN device (for example, an e-NodeB) in LTE, or a next generation radio access network device (for example, a gNB) in the 5G wireless communication system.

The AMF may support access authentication, mobility management, registration management, connection management, lawful interception of the UE, support transmission of session management information between the UE and the SMF entity, and so on.

The UPF has a routing function of a data packet, for example, may obtain a data packet from a network and send the data packet to the RAN.

The SMF may support session management and the like, and the session management includes session establishment, modification, release, and the like.

DN: The DN is a network for data transmission. For example, the DU may be an operator service network, internet access, or a third-party service network.

For descriptions about the functions and the like of the AUSF, the NSSF, the NEF, the NRF, the UDM, and other network elements, refer to explanations and descriptions in the conventional technology. Details are not described herein.

It should be understood that there are corresponding communication interfaces between the various network elements, for example, a Uu interface between the UE and the AN/RAN, an N3 interface between the AN/RAN and the UPF, an N6 interface between the UPF and the DN, an N4 interface between the UPF and the SMF, and an N2 interface between the AN/RAN and the AMF, as shown in FIG. 1.

In a conventional handover technology, to ensure continuity of downlink data transmission in a handover procedure, a source base station forwards a downlink service data packet received from a core network to a target base station, and then the target base station sends the downlink service data packet is to UE. For example, when the source base station determines to hand over a serving base station of the UE to the target base station, the source base station may send, to the UE, one part of downlink service data packets that are received from the core network and have not sent to the UE, and forward the other part of the downlink service data packets to the target base station, and then the target base station sends the other part of the downlink service data packets to the UE. For another example, when the source base station determines to hand over a serving base station of the UE to the target base station, the source base station may forward, to the target base station, all downlink service data packets that are received from the core network and have not sent to the UE, and then the target base station sends the downlink service data packets to the UE.

FIG. 2 is a diagram of data packet forwarding from a source base station to a target base station in a conventional handover technology. As shown in FIG. 2, a current serving base station of UE 201 is a base station 202-1 (or referred to as a source base station 202-1). The source base station 202-1 may configure a measurement procedure of the UE 201, and accordingly, the UE 201 may perform measurement reporting based on the configuration. The source base station 202-1 may then determine to hand over the serving base station of the UE 201 to a base station 202-2 (or referred to as a target base station 202-2) based on information such as a measurement report of the UE 201. In a handover procedure, the source base station 202-1 may forward, to the target base station 202-2, downlink service data packets #1 to #4 that are received from the core network 203 (for example, a UPF) and have not sent to the UE 201, and then the target base station 202-2 sends the downlink service data packets to the UE 201.

The data packet forwarding procedure from the source base station to the target base station introduces delays to the forwarded data packets (for example, the downlink service data packets #1 to #4), and consequently, end to end (End to End, E2E) delays of these data packets are increased. However, the increase in the E2E delays of the data packets may reduce quality of service provided by a network for the UE. This defect is more evident especially when a service performed by the UE is a time-sensitive service (for example, industrial control and autonomous driving).

To overcome the foregoing defect, this application provides a communication method to avoid delays introduced by data forwarding from the source base station to the target base station, ensure quality of service of the service provided by the network for the UE, meet a delay requirement of a delay sensitive service, and so on.

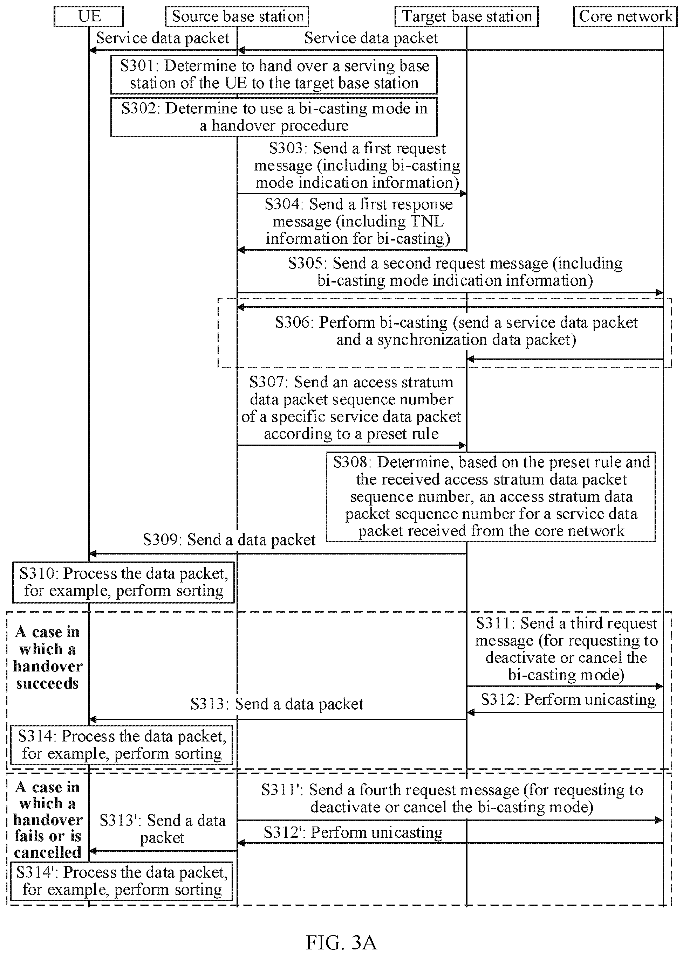

FIG. 3A is a time sequence diagram of a communication method for a handover scenario according to an embodiment of this application. As shown in FIG. 3A, before a serving base station of UE is handed over from a source base station to a target base station, a core network sends a service data packet to the source base station, and then the source base station sends the service data packet to the UE. In this embodiment of this application, the service data packet may also be referred to as service data, user data (user data), a user data packet, or the like.

In S301, the source base station determines to hand over the serving base station of the UE to the target base station.

In S302, the source base station determines to use a bi-casting (bi-casting) mode in a handover procedure.

The bi-casting mode is relative to a conventional unicasting mode. In a conventional handover technology, the core network sends a downlink service data packet to the source base station and does not send a downlink service data packet to the target base station in a handover procedure. The bi-casting mode in this embodiment of this application means that the core network sends a same downlink service data packet to both the source base station and the target base station in the handover procedure. That is, in the handover procedure, the source base station and the target base station receive the same downlink service data packet from the core network.

In S303, the source base station sends a first request message to the target base station. The first request message may include bi-casting mode indication information indicating that the bi-casting mode is used in the handover procedure.

According to an example of this embodiment of this application, the bi-casting mode indication information may be associated with one or more service bearers of the UE. For example, the bi-casting mode indication information may be associated with identifiers of the one or more service bearers of the UE. In this way, bi-casting may be performed at a granularity of service bearer.

In this example, the first request message described above may include not only the bi-casting mode indication information, but also the identifiers of the one or more associated service bearers.

In S304, the target base station sends a first response message to the source base station. The first response message may include transport network layer (Transport Network Layer, TNL) information for bi-casting.

The transport network layer information for bi-casting is used by the target base station to receive a downlink data packet from the core network in the bi-casting mode. In an example in which a wireless communication system uses a GPRS (general packet radio service, General Packet Radio Service) tunnel protocol-user plane (GPRS Tunnel Protocol-User plane, GTP-U) tunnel, the transport network layer information may be GTP tunnel endpoint (GTP Tunnel Endpoint) information. The GTP tunnel endpoint information may include a transport network layer address of the tunnel, an identifier of the tunnel, and the like. The GTP tunnel endpoint information may further include information that indicates tunnel usage.

It should be understood that in an example in which the wireless communication system uses another tunnel, the transport network layer information may include information related to the another tunnel.

In S305, the source base station sends a second request message to the core network.

The second request message may include bi-casting mode indication information indicating to use the bi-casting mode in the handover procedure. The second request message may further include the transport network layer information for bi-casting obtained by the source base station from the target base station. The second request message may further include transport network layer information for bi-casting of the source base station. The second request message may further include an identifier of the target base station. The second request message may further include identifiers of one or more service bearers associated with the bi-casting mode indication information. That is, the bi-casting mode may be per PDU session (session) or per EPS bearer (bearer).

In S306, the core network performs bi-casting based on the second request message.

Specifically, after receiving the second request message, the core network sends, to both the source base station and the target base station, a downlink service data packet that is originally sent only to the source base station.

In addition, in the handover procedure, data continuity is usually implemented at an access stratum (for example, a packet data convergence protocol (Packet Data Convergence Protocol, PDCP) layer). Therefore, the source base station and the target base station need to assign a same access stratum data packet sequence number (Sequence Number, SN) (for example, a PDCP layer data packet sequence number, or a PDCP layer data packet sequence number and an HFN (Hyper Frame Number, hyper frame number)) to a same downlink service data packet, so that the UE can concatenate a data packet received from the source base station and a data packet received from the target base station, to sort the data packets. In the following, an example in which the access layer data packet sequence number is a PDCP layer data packet sequence number is used to describe this embodiment of this application.

To ensure that the source base station and the target base station assign the same access stratum data packet sequence number to the same downlink service data packet, the core network sends synchronization data packets to the source base station and the target base station according to a first rule in a process in which the core network sends downlink service data packets to the source base station and the target base station in the bi-casting mode.

For example, the first rule may be that the first data packet or the N^{th} data packet sent by the core network in the bi-casting mode is a synchronization data packet, where N is a positive integer. In the example in which the first rule is that the first data packet sent by the core network in the bi-casting mode is a synchronization data packet, the core network may sequentially send the synchronization data packet, a first downlink service data packet, a second downlink service data packet, a third downlink service data packet, a fourth downlink service data packet, and the like to each of the source base station and the target base station. In the example in which the first rule is that the N^{th} data packet sent by the core network in the bi-casting mode is a synchronization data packet and N=3, the core network may sequentially send a first downlink service data packet, a second downlink service data packet, the synchronization data packet, a third downlink service data packet, a fourth downlink service data packet, and the like to each of the source base station and the target base station.

In another example, the first rule may be sending the synchronization data packet during sending of the service data packet by the core network in the bi-casting mode.

It should be understood that in the bi-casting mode, the core network may send one or more synchronization data packets. In the following, an example in which the core network sends one synchronization data packet is used to describe this embodiment of this application. The synchronization data packet is used to enable the source base station and the target base station to assign a same access stratum data packet sequence number to a same downlink service data packet sent by the core network. Specific implementation principles are described in detail below with reference to S307 and S308.

According to an example of this embodiment of this application, the synchronization data packet may not include any service data (which may also be referred to as user data user data). For example, the synchronization data packet may be one or more null data packets. A header of the synchronization data packet may include an indicator, to indicate that the data packet is a synchronization data packet.

According to another example of this embodiment of this application, the synchronization data packet may be a data packet including service data. For example, a header of the synchronization data packet may include an indicator, to indicate that the data packet is a synchronization data packet. A data portion of the synchronization data packet may include the service data. Bits corresponding to the data portion of the synchronization data packet may be normal service data or padding bits. For example, in a case of padding bits, the values of the bits may be preset values. For example, a value of each bit may be 0 or 1.

According to another example of an embodiment of this application, the synchronization data packet may be specifically a GTP-U (GPRS Tunnel Protocol-User plane, GPRS tunnel protocol-user plane) data packet. In this case, the header of the synchronization data packet may be a header of the GTP-U data packet. That is, the header of the GTP-U data packet indicates that the data packet is a synchronization data packet.

In this embodiment of this application, the synchronization data packet may also be referred to as a synchronization marker (synchronization marker or sync marker), a special marker (special marker), a special packet (special packet), a bi-casting marker (bi-casting marker), a bi-casting packet (bi-casting packet), or the like.

In S307, after the source base station receives the synchronization data packet, the source base station sends, to the target base station according to a predefined second rule that is followed by both the source base station and the target base station, an access stratum data packet sequence number of a specific service data packet received from the core network.

According to an example of this embodiment of this application, the second rule may be that the source base station sends, to the target base station, an access stratum data packet sequence number of a service data packet received before the synchronization data packet. The service data packet may be a previous service data packet or a previous M^{th} service data packet arranging from the synchronization data packet, where M is a positive integer.

### Example 1:

In an example in which the service data packet is the previous service data packet of the synchronization data packet, it is assumed that the core network sequentially sends a first downlink service data packet, a second downlink service data packet, the synchronization data packet, a third downlink service data packet, a fourth downlink service data packet, and the like to each of the source base station and the target base station. Accordingly, the source base station may assign access stratum data packet sequence numbers SNs to the first downlink service data packet, the second downlink service data packet, the synchronization data packet, the third downlink service data packet, the fourth downlink service data packet, and the like. For example, an access stratum data packet sequence number of the first downlink service data packet is SN=10, an access stratum data packet sequence number of the second downlink service data packet is SN=11, an access stratum data packet sequence number of the synchronization data packet is SN=12, an access stratum data packet sequence number of the third downlink service data packet is SN=13, an access stratum data packet sequence number of the fourth downlink service data packet is SN=14, and so on. The source base station may then send the access stratum data packet sequence number of the previous service data packet of the synchronization data packet, namely, the second downlink service data packet, to the target base station, that is, send SN=11 to the target base station.

### Example 2:

In an example in which the service data packet is the previous M^{th} service data packet arranging from the synchronization data packet and M=2, it is assumed that the core network sequentially sends a first downlink service data packet, a second downlink service data packet, the synchronization data packet, a third downlink service data packet, a fourth downlink service data packet, and the like to each of the source base station and the target base station. Accordingly, the source base station may assign access stratum data packet sequence numbers SNs to the first downlink service data packet, the second downlink service data packet, the synchronization data packet, the third downlink service data packet, the fourth downlink service data packet, and the like. For example, an access stratum data packet sequence number of the first downlink service data packet is SN=10, an access stratum data packet sequence number of the second downlink service data packet is SN=11, an access stratum data packet sequence number of the synchronization data packet is SN=12, an access stratum data packet sequence number of the third downlink service data packet is SN=13, an access stratum data packet sequence number of the fourth downlink service data packet is SN=14, and so on. The source base station may then send the access stratum data packet sequence number of the previous second service data packet arranging from the synchronization data packet, namely, the first downlink service data packet, to the target base station, that is, send SN=10 to the target base station.

According to another example of this embodiment of this application, the second rule may alternatively be that the source base station sends, to the target base station, an access stratum data packet sequence number of a service data packet received after the synchronization data packet. The service data packet may be the first service data packet or the M^{th} service data packet following the synchronization data packet.

### Example 3:

In an example in which the service data packet is the first service data packet following the synchronization data packet, it is assumed that the core network sequentially sends a first downlink service data packet, a second downlink service data packet, the synchronization data packet, a third downlink service data packet, a fourth downlink service data packet, and the like to each of the source base station and the target base station. Accordingly, the source base station may assign access stratum data packet sequence numbers SNs to the first downlink service data packet, the second downlink service data packet, the synchronization data packet, the third downlink service data packet, the fourth downlink service data packet, and the like. For example, an access stratum data packet sequence number of the first downlink service data packet is SN=10, an access stratum data packet sequence number of the second downlink service data packet is SN=11, an access stratum data packet sequence number of the synchronization data packet is SN=12, an access stratum data packet sequence number of the third downlink service data packet is SN=13, an access stratum data packet sequence number of the fourth downlink service data packet is SN=14, and so on. The source base station may then send the access stratum data packet sequence number of the first service data packet following the synchronization data packet, namely, the third downlink service data packet, to the target base station, that is, send SN=13 to the target base station.

### Example 4:

In an example in which the service data packet is the M^{th} service data packet following the synchronization data packet and M=2, it is assumed that the core network sequentially sends a first downlink service data packet, a second downlink service data packet, the synchronization data packet, a third downlink service data packet, a fourth downlink service data packet, and the like to each of the source base station and the target base station. Accordingly, the source base station may assign access stratum data packet sequence numbers SNs to the first downlink service data packet, the second downlink service data packet, the synchronization data packet, the third downlink service data packet, the fourth downlink service data packet, and the like. For example, an access stratum data packet sequence number of the first downlink service data packet is SN=10, an access stratum data packet sequence number of the second downlink service data packet is SN=11, an access stratum data packet sequence number of the synchronization data packet is SN=12, an access stratum data packet sequence number of the third downlink service data packet is SN=13, an access stratum data packet sequence number of the fourth downlink service data packet is SN=14, and so on. The source base station may then send the access stratum data packet sequence number of the second service data packet following the synchronization data packet, namely, the fourth downlink service data packet, to the target base station, that is, send SN=14 to the target base station.

According to another example of an embodiment of this application, the second rule may alternatively be that the source base station sends the access stratum data packet sequence number of the synchronization data packet to the target base station.

### Example 5:

For example, it is assumed that the core network sequentially sends a first downlink service data packet, a second downlink service data packet, the synchronization data packet, a third downlink service data packet, a fourth downlink service data packet, and the like to each of the source base station and the target base station. Accordingly, the source base station may assign access stratum data packet sequence numbers SNs to the first downlink service data packet, the second downlink service data packet, the synchronization data packet, the third downlink service data packet, the fourth downlink service data packet, and the like. For example, an access stratum data packet sequence number of the first downlink service data packet is SN=10, an access stratum data packet sequence number of the second downlink service data packet is SN=11, the access stratum data packet sequence number of the synchronization data packet is SN=12, an access stratum data packet sequence number of the third downlink service data packet is SN=13, an access stratum data packet sequence number of the fourth downlink service data packet is SN=14, and so on. The source base station may then send the access stratum data packet sequence number of the synchronization data packet to the target base station, that is, send SN=12 to the target base station.

As described above, the access stratum data packet sequence number may be a PDCP layer data packet sequence number. It should be understood that for another communication system, the access stratum data packet sequence number may be any access stratum data packet sequence number used to maintain data continuity or service continuity during a handover.

It should be understood that the source base station and the target base station may also pre-negotiate or agree not to assign an access stratum data packet sequence number to the synchronization data packet. In this case, Examples 1 to 4 described above may be modified. For example, Example 1 may be modified to Example 6, Example 2 may be modified to Example 7, Example 3 may be modified to Example 8, and Example 4 may be modified to Example 9.

### Example 6:

In an example in which the service data packet is the previous service data packet of the synchronization data packet, it is assumed that the core network sequentially sends a first downlink service data packet, a second downlink service data packet, the synchronization data packet, a third downlink service data packet, a fourth downlink service data packet, and the like to each of the source base station and the target base station. Accordingly, the source base station may assign access stratum data packet sequence numbers SNs to the first downlink service data packet, the second downlink service data packet, the third downlink service data packet, the fourth downlink service data packet, and the like. For example, an access stratum data packet sequence number of the first downlink service data packet is SN=10, an access stratum data packet sequence number of the second downlink service data packet is SN=11, an access stratum data packet sequence number of the third downlink service data packet is SN=12, an access stratum data packet sequence number of the fourth downlink service data packet is SN=13, and so on. The source base station may then send the access stratum data packet sequence number of the previous service data packet of the synchronization data packet, namely, the second downlink service data packet, to the target base station, that is, send SN=11 to the target base station.

### Example 7:

In an example in which the service data packet is the previous M^{th} service data packet arranging from the synchronization data packet and M=2, it is assumed that the core network sequentially sends a first downlink service data packet, a second downlink service data packet, the synchronization data packet, a third downlink service data packet, a fourth downlink service data packet, and the like to each of the source base station and the target base station. Accordingly, the source base station may assign access stratum data packet sequence numbers SNs to the first downlink service data packet, the second downlink service data packet, the third downlink service data packet, the fourth downlink service data packet, and the like. For example, an access stratum data packet sequence number of the first downlink service data packet is SN=10, an access stratum data packet sequence number of the second downlink service data packet is SN=11, an access stratum data packet sequence number of the third downlink service data packet is SN=12, an access stratum data packet sequence number of the fourth downlink service data packet is SN=13, and so on. The source base station may then send the access stratum data packet sequence number of the previous second service data packet arranging from the synchronization data packet, namely, the first downlink service data packet, to the target base station, that is, send SN=10 to the target base station.

### Example 8:

In an example in which the service data packet is the first service data packet following the synchronization data packet, it is assumed that the core network sequentially sends a first downlink service data packet, a second downlink service data packet, the synchronization data packet, a third downlink service data packet, a fourth downlink service data packet, and the like to each of the source base station and the target base station. Accordingly, the source base station may assign access stratum data packet sequence numbers SNs to the first downlink service data packet, the second downlink service data packet, the third downlink service data packet, the fourth downlink service data packet, and the like. For example, an access stratum data packet sequence number of the first downlink service data packet is SN=10, an access stratum data packet sequence number of the second downlink service data packet is SN=11, an access stratum data packet sequence number of the third downlink service data packet is SN=12, an access stratum data packet sequence number of the fourth downlink service data packet is SN=13, and so on. The source base station may then send the access stratum data packet sequence number of the first service data packet following the synchronization data packet, namely, the third downlink service data packet, to the target base station, that is, send SN=12 to the target base station.

### Example 9:

In an example in which the service data packet is the M^{th} service data packet following the synchronization data packet and M=2, it is assumed that the core network sequentially sends a first downlink service data packet, a second downlink service data packet, the synchronization data packet, a third downlink service data packet, a fourth downlink service data packet, and the like to each of the source base station and the target base station. Accordingly, the source base station may assign access stratum data packet sequence numbers SNs to the first downlink service data packet, the second downlink service data packet, the third downlink service data packet, the fourth downlink service data packet, and the like. For example, an access stratum data packet sequence number of the first downlink service data packet is SN=10, an access stratum data packet sequence number of the second downlink service data packet is SN=11, an access stratum data packet sequence number of the third downlink service data packet is SN=12, an access stratum data packet sequence number of the fourth downlink service data packet is SN=13, and so on. The source base station may then send the access stratum data packet sequence number of the second service data packet following the synchronization data packet, namely, the fourth downlink service data packet, to the target base station, that is, send SN=13 to the target base station.

In S308, after the target base station receives the synchronization data packet, the target base station determines, based on the access stratum data packet sequence number received from the source base station and the second rule, an access stratum data packet sequence number for a downlink service data packet received from the core network.

As described above, with reference to S307, the second rule may be that the source base station sends, to the target base station, an access stratum data packet sequence number of a service data packet received before the synchronization data packet. The service data packet may be the previous service data packet or the previous M^{th} service data packet arranging from the synchronization data packet, where M is a positive integer.

In Example 1, the source base station sends the access stratum data packet sequence number of the previous service data packet of the synchronization data packet, namely, the second downlink service data packet, to the target base station, that is, sends SN=11 to the target base station. Accordingly, in S308, the target base station determines, as 11, the access stratum data packet sequence number of the received previous service data packet of the synchronization data packet, namely, the second downlink service data packet, and may also determine the access stratum data packet sequence numbers of the other data packets accordingly. For example, the target base station can determine that the access stratum data packet sequence number of the first downlink service data packet received from the core network is SN=10, the access stratum data packet sequence number of the synchronization data packet is SN=12, the access stratum data packet sequence number of the third downlink service data packet is SN=13, the access stratum data packet sequence number of the fourth downlink service data packet is SN=14, and so on.

In Example 2, the source base station may send the access stratum data packet sequence number of the previous second service data packet arranging from the synchronization data packet, namely, the first downlink service data packet, to the target base station, that is, send SN=10 to the target base station. Accordingly, in S308, the target base station determines, as 10, the access stratum data packet sequence number of the received previous second service data packet arranging from the synchronization data packet, namely, the first downlink service data packet, and may also determine the access stratum data packet sequence numbers of the other data packets accordingly. For example, the target base station can determine that the access stratum data packet sequence number of the second downlink service data packet received from the core network is SN=11, the access stratum data packet sequence number of the synchronization data packet is SN=12, the access stratum data packet sequence number of the third downlink service data packet is SN=13, the access stratum data packet sequence number of the fourth downlink service data packet is SN=14, and so on.

As described above, with reference to S307, the second rule may alternatively be that the source base station sends, to the target base station, an access stratum data packet sequence number of a service data packet received after the synchronization data packet. The service data packet may be the first service data packet or the M^{th} service data packet following the synchronization data packet.

In Example 3, the source base station may send the access stratum data packet sequence number of the first service data packet following the synchronization data packet, namely, the third downlink service data packet, to the target base station, that is, send SN=13 to the target base station. Accordingly, in S308, the target base station determines, as 13, the access stratum data packet sequence number of the received first service data packet following the synchronization data packet, namely, the third downlink service data packet, and may also determine the access stratum data packet sequence numbers of the other data packets accordingly. For example, the target base station can determine that the access stratum data packet sequence number of the first downlink service data packet received from the core network is SN=10, the access stratum data packet sequence number of the second downlink service data packet is SN=11, the access stratum data packet sequence number of the synchronization data packet is SN=12, the access stratum data packet sequence number of the fourth downlink service data packet is SN=14, and so on.

In Example 4, the source base station may send the access stratum data packet sequence number of the second service data packet following the synchronization data packet, namely, the fourth downlink service data packet, to the target base station, that is, send SN=14 to the target base station. Accordingly, in S308, the target base station determines, as 14, the access stratum data packet sequence number of the received second service data packet following the synchronization data packet, namely, the fourth downlink service data packet, and may also determine the access stratum data packet sequence numbers of the other data packets accordingly. For example, the target base station can determine that the access stratum data packet sequence number of the first downlink service data packet received from the core network is SN=10, the access stratum data packet sequence number of the second downlink service data packet is SN=11, the access stratum data packet sequence number of the synchronization data packet is SN=12, the access stratum data packet sequence number of the third downlink service data packet is SN=13, and so on.

As described above, with reference to S307, the second rule may alternatively be that the source base station sends the access stratum data packet sequence number of the synchronization data packet to the target base station.

In Example 5, the source base station may send the access stratum data packet sequence number of the synchronization data packet to the target base station, that is, send SN=12 to the target base station. Accordingly, in S308, the target base station determines the access stratum data packet sequence number of the received synchronization data packet as 12, and may also determine the access stratum data packet sequence numbers of the other data packets accordingly. For example, the target base station can determine that the access stratum data packet sequence number of the first downlink service data packet received from the core network is SN=10, the access stratum data packet sequence number of the second downlink service data packet is SN=11, the access stratum data packet sequence number of the third downlink service data packet is SN=13, the access stratum data packet sequence number of the fourth downlink service data packet is SN=14, and so on.

In addition, in Example 6, the source base station may send the access stratum data packet sequence number of the previous service data packet of the synchronization data packet, namely, the second downlink service data packet, to the target base station, that is, send SN=11 to the target base station. Accordingly, in S308, the target base station determines, as 11, the access stratum data packet sequence number of the received previous service data packet of the synchronization data packet, namely, the second downlink service data packet, and may also determine the access stratum data packet sequence numbers of the other data packets accordingly. For example, the target base station can determine that the access stratum data packet sequence number of the first downlink service data packet received from the core network is SN=10, the access stratum data packet sequence number of the third downlink service data packet is SN=12, the access stratum data packet sequence number of the fourth downlink service data packet is SN=13, and so on.

In Example 7, the source base station may send the access stratum data packet sequence number of the previous second service data packet arranging from the synchronization data packet, namely, the first downlink service data packet, to the target base station, that is, send SN=10 to the target base station. Accordingly, in S308, the target base station determines, as 10, the access stratum data packet sequence number of the received previous second service data packet arranging from the synchronization data packet, namely, the first downlink service data packet, and may also determine the access stratum data packet sequence numbers of the other data packets accordingly. For example, the target base station can determine that the access stratum data packet sequence number of the second downlink service data packet received from the core network is SN=11, the access stratum data packet sequence number of the third downlink service data packet is SN=12, the access stratum data packet sequence number of the fourth downlink service data packet is SN=13, and so on.

In Example 8, the source base station may send the access stratum data packet sequence number of the first service data packet following the synchronization data packet, namely, the third downlink service data packet, to the target base station, that is, send SN=12 to the target base station. Accordingly, in S308, the target base station determines, as 12, the access stratum data packet sequence number of the received first service data packet following the synchronization data packet, namely, the third downlink service data packet, and may also determine the access stratum data packet sequence numbers of the other data packets accordingly. For example, the target base station can determine that the access stratum data packet sequence number of the first downlink service data packet received from the core network is SN=10, the access stratum data packet sequence number of the second downlink service data packet is SN=11, the access stratum data packet sequence number of the fourth downlink service data packet is SN=13, and so on.

In Example 9, the source base station may send the access stratum data packet sequence number of the second service data packet following the synchronization data packet, namely, the fourth downlink service data packet, to the target base station, that is, send SN=13 to the target base station. Accordingly, in S308, the target base station determines, as 13, the access stratum data packet sequence number of the received second service data packet following the synchronization data packet, namely, the fourth downlink service data packet, and may also determine the access stratum data packet sequence numbers of the other data packets accordingly. For example, the target base station can determine that the access stratum data packet sequence number of the first downlink service data packet received from the core network is SN=10, the access stratum data packet sequence number of the second downlink service data packet is SN=11, the access stratum data packet sequence number of the third downlink service data packet is SN=12, and so on.

In addition, in other examples, the access stratum data packet sequence number sent by the source base station to the target base station may be an access stratum data packet sequence number of a service data packet sent by the core network in a unicasting mode. That is, the source base station receives the service data packet from the core network, but the target base station does not receive the service data packet from the core network. In this case, the target base station may determine, based on an access stratum data packet sequence number received from the source base station and the second rule, an access stratum data packet sequence number of a service data packet received from the core network in the bi-casting mode, and does not need to consider whether a service data packet corresponding to the access stratum data packet sequence number sent by the source base station is previously received by the target base station.

Through S307 and S308, in the bi-casting mode, a data packet from the core network to the source base station and a data packet from the core network to the target base station have a same access stratum data packet sequence number at a source base station side and a target base station side.

In S309, the target base station processes the service data packet received from the core network, to obtain a processed data packet. The target base station then sends the processed data packet to the UE. The processing may be, for example, removing a header of the service data packet received from the core network, adding a new header, and encapsulating the service data packet into a new data packet, and a header of the new data packet includes the corresponding access stratum data packet sequence number.

In S310, an access stratum of the UE may process the received data packet based on the access stratum data packet sequence number. The processing may be, for example, sorting data packets or the like.

Optionally, after S306, the source base station may also process a service data packet received from the core network and send the processed data packet to the UE. The processing is similar to the processing in S309, and details are not described herein again. In this case, in S310, the processing performed by the UE may further include deleting a duplicate data packet (that is, deduplicating) (not shown in the figure). In a scenario in which the handover succeeds, in S311, the target base station may send a third request message to the core network. The third request message may be for requesting to deactivate or cancel the bi-casting mode (shown in the figure). Alternatively, the third request message may request the core network to use a unicasting mode for the target base station (not shown in the figure). Then, in S312, the core network performs unicasting according to the third request message, that is, sends a downlink service data packet only to the target base station but not to the source base station. In S313, the target base station processes the service data packet received from the core network, to obtain a processed data packet, and then the target base station sends the processed data packet to the UE. In S314, the access stratum of the UE may process the received data packet based on an access stratum data packet sequence number, for example, sort data packets.

In a scenario in which the handover fails or is canceled, in S311', the source base station may send a fourth request message to the core network. The fourth request message may be for requesting to deactivate or cancel the bi-casting mode (shown in the figure). Alternatively, the fourth request message may request the core network to use a unicasting mode for the source base station (not shown in the figure). Then, in S312', the core network performs unicasting according to the fourth request message, that is, sends a downlink service data packet only to the source base station but not to the target base station. In S313', the source base station processes the service data packet received from the core network, to obtain a processed data packet, and then the source base station sends the processed data packet to the UE. In S314', the access stratum of the UE may process the received data packet based on an access stratum data packet sequence number, for example, sort data packets.

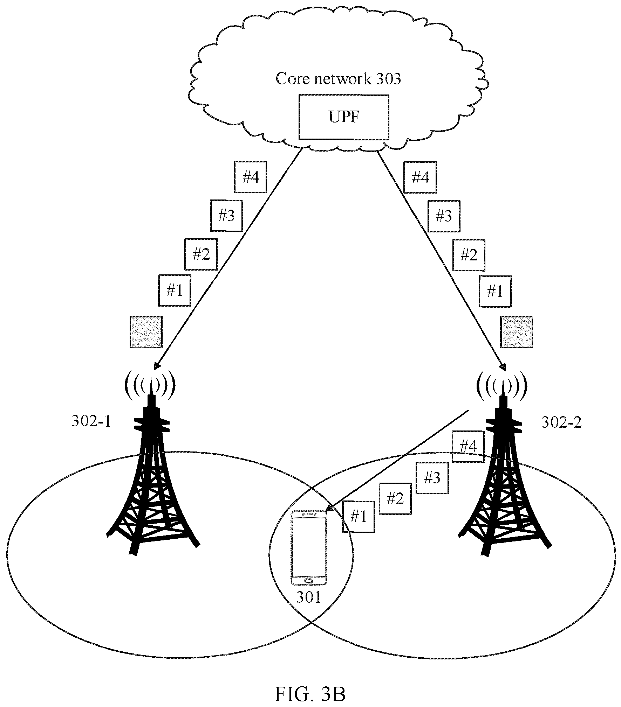

FIG. 3B is a diagram of sending data packets to a source base station and a target base station by a core network in a bi-casting mode in a handover procedure according to an embodiment of this application. As shown in FIG. 3B, a current serving base station of UE 301 is a base station 302-1 (or referred to as a source base station 302-1). The source base station 302-1 may configure a measurement procedure of the UE 301, and accordingly, the UE 301 may perform measurement reporting based on the configuration. The source base station 302-1 may then determine to hand over the serving base station of the UE 301 to a base station 302-2 (or referred to as a target base station 302-2) based on information such as a measurement report of the UE 301. In the handover procedure, the core network sends synchronization data packets (gray boxes in FIG. 3B) and downlink service data packets #1 to #4 to each of the source base station 302-1 and the target base station 302-2. The synchronization data packets are used to ensure that the source base station 302-1 and the target base station 302-2 assign a same access stratum data packet sequence number to a service data packet. The service data packets are then sent by the target base station 302-2 to the UE 301.

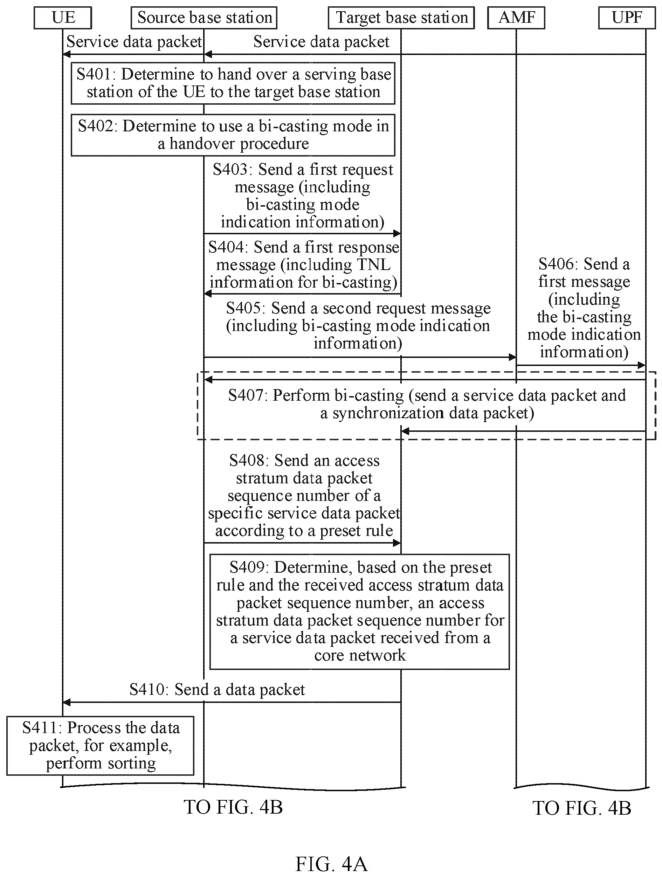

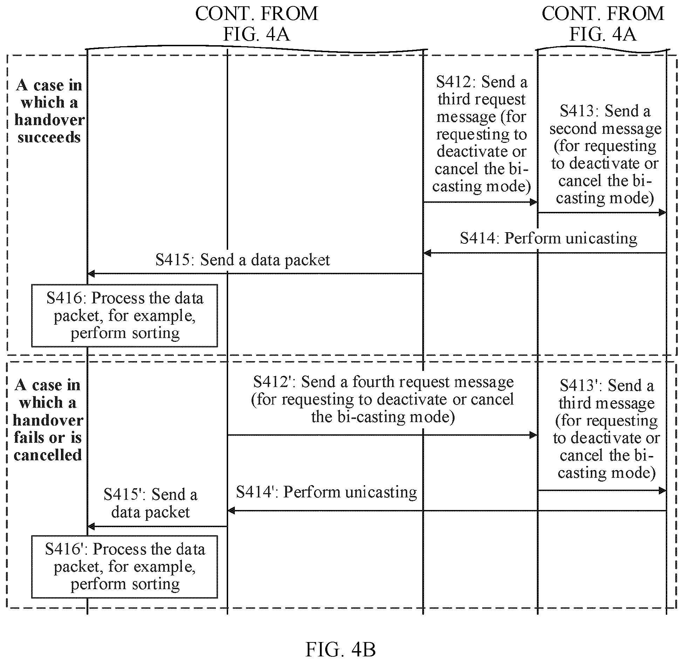

FIG. 4A and FIG. 4B are a time sequence diagram of another communication method for a handover scenario according to an embodiment of this application. The main difference of FIG. 4A and FIG. 4B from FIG. 3A is that FIG. 4A and FIG. 4B further refine the core network to include a control plane entity and a user plane entity. In FIG. 4A and FIG. 4B, an example in which the control plane entity is an AMF and the user plane entity is a UPF is used to describe the embodiment of FIG. 4A and FIG. 4B.

In S401, a source base station determines to hand over a serving base station of UE to a target base station. This step is similar to S301, and details are not described herein again.

In S402, the source base station determines to use a bi-casting mode in a handover procedure. This step is similar to S302, and details are not described herein again.

In S403, the source base station sends a first request message to the target base station. The first request message may include bi-casting mode indication information indicating that the bi-casting mode is used in the handover procedure. This step is similar to S303, and details are not described herein again.

In S404, the target base station sends a first response message to the source base station. The first response message may include transport network layer information for bi-casting. This step is similar to S304, and details are not described herein again.

In S405, the source base station sends a second request message to the AMF.

The second request message may include bi-casting mode indication information indicating to use the bi-casting mode in the handover procedure. The second request message may further include the transport network layer information for bi-casting obtained by the source base station from the target base station. The second request message may further include transport network layer information for bi-casting of the source base station. The second request message may further include an identifier of the target base station. The second request message may further include identifiers of one or more service bearers associated with the bi-casting mode indication information. That is, the bi-casting mode may be per PDU session (session) or per EPS bearer (bearer).

In S406, the AMF sends a first message to the UPF, where the first message may include an information element in the second request message.

In S407, the UPF performs bi-casting according to the first message.

Specifically, after receiving the first message, the UPF sends, to both the source base station and the target base station, a downlink service data packet that is originally sent only to the source base station. In addition, in a process in which the UPF sends the downlink service data packets to the source base station and the target base station in the bi-casting mode, the UPF sends synchronization data packets to the source base station and the target base station according to a first rule, to ensure that the source base station and the target base station assign a same access stratum data packet sequence number to a same downlink service data packet.

This step is similar to S306, and details are not described herein again.

In S408, after the source base station receives the synchronization data packet, the source base station sends, to the target base station according to a predefined second rule that is followed by both the source base station and the target base station, an access stratum data packet sequence number of a specific service data packet received from the core network. This step is similar to S307, and details are not described herein again.

In S409, after the target base station receives the synchronization data packet, the target base station determines, based on the access stratum data packet sequence number received from the source base station and the second rule, an access stratum data packet sequence number for a downlink service data packet received from the UPF. This step is similar to S308, and details are not described herein again.

In S410, the target base station processes the service data packet received from the core network, to obtain a processed data packet. The target base station then sends the processed data packet to the UE. This step is similar to S309, and details are not described herein again.

In S411, an access stratum of the UE may process the received data packet based on the access stratum data packet sequence number, for example, sort data packets. This step is similar to S310, and details are not described herein again.

Optionally, after S407, the source base station may also process a service data packet received from the core network and send the processed data packet to the UE. The processing is similar to the processing in S410, and details are not described herein again. In this case, in S411, the processing performed by the UE may further include deleting a duplicate data packet (that is, deduplicating) (not shown in the figure).

In a scenario in which the handover succeeds, in S412, the target base station may send a third request message to the AMF. The third request message may be for requesting to deactivate or cancel the bi-casting mode (shown in the figure). Alternatively, the third request message may request the core network to use a unicasting mode for the target base station (not shown in the figure). Then, in S413, the AMF sends a second message to the UPF. The second message may include an information element in the third request message. The second message may be for requesting to deactivate or cancel the bi-casting mode (shown in the figure). Alternatively, the second message may request the core network to use a unicasting mode for the target base station (not shown in the figure). Then, in S414, the UPF performs unicasting according to the second message, that is, sends a downlink service data packet only to the target base station but not to the source base station. In S415, the target base station processes the service data packet received from the UPF, to obtain a processed data packet, and then the target base station sends the processed data packet to the UE. In S416, the access stratum of the UE may process the received data packet based on an access stratum data packet sequence number, for example, sort data packets.

In a scenario in which the handover fails or is canceled, in S412', the source base station may send a fourth request message to the AMF. The fourth request message may be for requesting to deactivate or cancel the bi-casting mode (shown in the figure). Alternatively, the fourth request message may request the core network to use a unicasting mode for the source base station (not shown in the figure). Then, in S413', the AMF sends a third message to the UPF. The third message may include an information element in the fourth request message. The third message may be for requesting to deactivate or cancel the bi-casting mode (shown in the figure). Alternatively, the third message may request the core network to use a unicasting mode for the source base station (not shown in the figure). Then, in S414', the UPF performs unicasting according to the third message, that is, sends a downlink service data packet only to the source base station but not to the target base station. In S415', the source base station processes the service data packet received from the UPF, to obtain a processed data packet, and then the source base station sends the processed data packet to the UE. In S416', the access stratum of the UE may process the received data packet based on an access stratum data packet sequence number, for example, sort data packets.

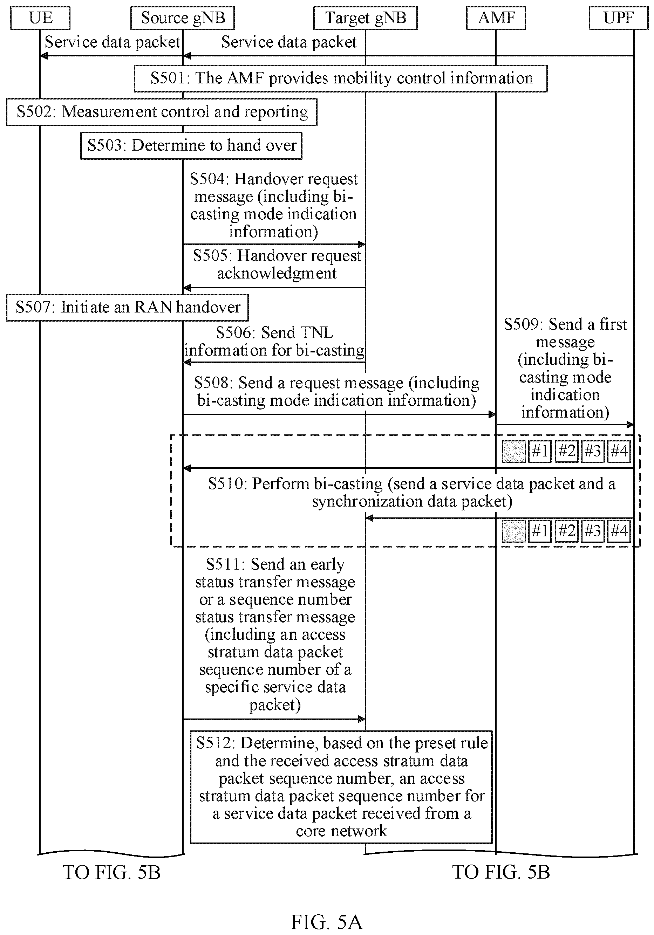

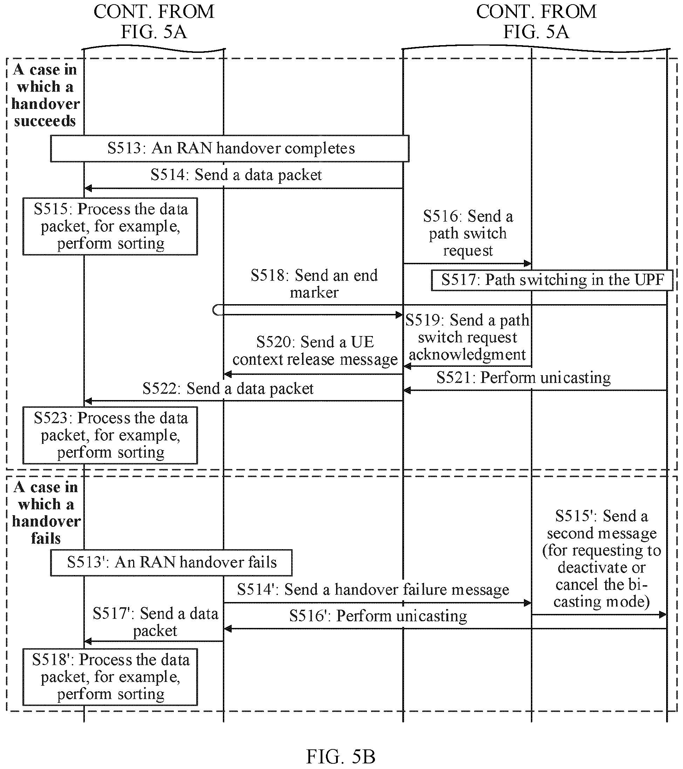

FIG. 5A and FIG. 5B are a time sequence diagram of another communication method for a handover scenario according to an embodiment of this application. A main difference of FIG. 5A and FIG. 5B from FIG. 3A and FIG. 4A and FIG. 4B is that the handover scenarios in FIG. 3A and FIG. 4A and FIG. 4B are general handover scenarios, but the handover scenario in FIG. 5A and FIG. 5B is a dual active protocol stack handover (Dual Active Protocol Stack Hand Over, DAPS HO) scenario in a 5G wireless communication system. FIG. 5A and FIG. 5B also further refines a core network to include a control plane entity and a user plane entity. In FIG. 5A and FIG. 5B, an example in which a control plane entity is an AMF and the user plane entity is a UPF is used to describe the embodiment of FIG. 5A and FIG. 5B. FIG. 5A and FIG. 5B further refine a source base station to be a gNB and a target base station to be a gNB.

As shown in FIG. 5A and FIG. 5B, before a serving base station of UE is handed over from the source gNB to the target gNB, the UPF sends a service data packet to the source gNB, and the source gNB then sends the service data packet to the UE. As described above, in this embodiment of this application, the service data packet may also be referred to as service data, user data (user data), a user data packet, or the like.

In S501, the AMF provides mobility control information (mobility control information) to the source gNB. A UE context in the source gNB includes information about roaming and access restrictions, and these information is provided during connection establishment or last tracking area (Tracking Area, TA) update.

In S502, the source gNB configures a UE measurement procedure and the UE performs reporting based on the measurement configuration.

In S503, the source gNB determines to hand over the serving base station of the UE based on a measurement report and radio resource management (Radio Resource Management, RRM) information.

In S504, the source gNB sends a handover request message (Handover Request message) to the target gNB, where the handover request message includes information required to prepare a handover on a target side. The handover request message includes, for example, bi-casting mode indication information indicating that a bi-casting mode is used in a handover procedure.

According to an example of this embodiment of this application, the bi-casting mode indication information may be associated with one or more service bearers of the UE. For example, the bi-casting mode indication information may be associated with identifiers of the one or more service bearers of the UE. In this way, bi-casting may be performed at a granularity of service bearer. In this example, the handover request message described above may include not only the bi-casting mode indication information, but also the identifiers of the one or more service bearers. That is, the bi-casting mode may be per PDU session (session) or per EPS bearer (bearer).

The handover request message may further include an identifier (ID) of a target cell, KgNB*, a C-RNTI of the UE in the source gNB, an RRM configuration including UE inactive time, a basic access stratum configuration including antenna information and a DL carrier frequency, a current mapping rule from a QoS flow to a data radio bearer (Data Radio Bearer, DRB) applied to the UE, a system information block 1 (System Information Block 1, SIB1) from the source gNB, UE capabilities for different radio access technologies (Radio Access Technology, RAT), and protocol data unit (Protocol Data Unit, PDU) session-related information, and may further include UE reported measurement information. The measurement information may include beam-related information. The PDU session-related information may include slice information and a QoS flow level QoS profile. The source gNB may alternatively request a DAPS handover for one or more DRBs.

The target gNB may indicate whether the DAPS handover is accepted. If the DAPS handover is accepted, in S505, the target gNB sends a handover request acknowledgment (Handover Request Acknowledge) to the source gNB.

In S506, the target gNB sends transport network layer information for bi-casting to the source gNB.

The transport network layer information for bi-casting is used by the target base station to receive a downlink data packet from the core network in the bi-casting mode. In an example in which a wireless communication system uses a GPRS tunnel protocol-user plane (GPRS Tunnel Protocol-User plane, GTP-U) tunnel, the transport network layer information may be GTP tunnel endpoint (GTP Tunnel Endpoint) information. The GTP tunnel endpoint information may include a transport network layer address of the tunnel, an identifier of the tunnel, and the like. The GTP tunnel endpoint information may further include information that indicates tunnel usage.

It should be understood that in an example in which the wireless communication system uses another tunnel, the transport network layer information may include information related to the another tunnel.

It should be understood that S505 and S506 may be performed simultaneously, or S505 may be performed before S506. When S505 and S506 are performed simultaneously, the handover request acknowledgment may include the transport network layer information for bi-casting.

Further, after S505, in S507, the source gNB triggers a Uu handover by sending an RRCReconfiguration message to the UE. The message may include information required to access a target cell: an identifier (ID) of the target cell, a new C-RNTI, and a target gNB security algorithm identifier for a selected security algorithm. The message may further include a dedicated set of RACH resources, an association between RACH resources and SSBs, an association between RACH resources and UE-specific CSI-RS configurations, common RACH resources, system information of the target cell, and the like.

After S506, in S508, the source gNB sends a request message to the AMF. The request message may include bi-casting mode indication information indicating to use the bi-casting mode in the handover procedure. The request message may further include the transport network layer information for bi-casting obtained by the source gNB from the target gNB. The request message may further include transport network layer information for bi-casting of the source gNB. The request message may further include an identifier of the target gNB. The request message may further include identifiers of one or more service bearers associated with the bi-casting mode indication information.

In S509, the AMF sends a first message to the UPF, where the first message may include an information element in the request message in S508.

In S510, the UPF performs bi-casting according to the first message.

Specifically, after receiving the first message, the UPF sends, to both the source gNB and the target gNB, a downlink service data packet that is originally sent only to the source gNB. In addition, in a process in which the UPF sends the downlink service data packets to the source gNB and the target gNB in the bi-casting mode, the UPF sends synchronization data packets to the source gNB and the target gNB according to a first rule, to ensure that the source gNB and the target gNB assign a same access stratum data packet sequence number to a same downlink service data packet. The first rule is similar to the first rule described above with reference to FIG. 3A, and details are not described herein again.

FIG. 5A and FIG. 5B show an example in which the first rule is that the first data packet sent by the UPF in the bi-casting mode is a synchronization data packet. As shown in FIG. 5A and FIG. 5B, the UPF sequentially sends the synchronization data packet (as shown in grey boxes in FIG. 5A and FIG. 5B), a first downlink service data packet (#1), a second downlink service data packet (#2), a third downlink service data packet (#3), a fourth downlink service data packet (#4), and the like to each of the source gNB and the target gNB.

The synchronization data packet herein is similar to the synchronization data packet described above with reference to FIG. 3A, and details are not described herein again.

In S511, after the source gNB receives the synchronization data packet, the source gNB sends an early status transfer (EARLY STATUS TRANSFER) message or a sequence number status transfer (SN STATUS TRANSFER) message to the target gNB according to a predefined second rule that is followed by both the source gNB and the target gNB. The message includes an access stratum data packet sequence number of a specific service data packet received by the source gNB from the UPF, and the access stratum data packet sequence number may be, for example, a PDCP layer data packet sequence number, or a PDCP layer data packet sequence number and an HFN (Hyper Frame Number, hyper frame number).

The second rule herein is similar to the second rule described above with reference to FIG. 3A, and is not described herein again.

In S512, after the target gNB receives the synchronization data packet, the target gNB determines, based on the access stratum data packet sequence number received from the source gNB and the second rule, an access stratum data packet sequence number for a downlink service data packet received from the UPF. This step is similar to S308 described with reference to FIG. 3A, and details are not described herein again.

When the handover succeeds, in S513, the UE synchronizes with the target cell and completes an RRC handover procedure by sending an RRCReconfigurationComplete message to the target gNB. In case of the DAPS HO, the UE does not detach (detach) from a source cell after receiving the RRCReconfiguration message. When receiving an explicit release from a target node, the UE releases a source SRB resource and a security configuration of the source cell, and stops DL/UL reception/transmission with the source gNB.

In S514, the target gNB processes the service data packet received from the UPF, to obtain a processed data packet. The target gNB then sends the processed data packet to the UE. The processing may be, for example, removing a header of the service data packet received from the UPF, adding a new header, and encapsulating the service data packet into a new data packet, and a header of the new data packet includes the corresponding access stratum data packet sequence number. The processing may alternatively be, for example, discarding a data packet with an access stratum data packet sequence number smaller than the access stratum data packet sequence number in S511.

In S515, an access stratum of the UE may process the received data packet based on the access stratum data packet sequence number. The processing may be, for example, sorting data packets or the like.

In S516, the target gNB sends a path switch request (PATH SWITCH REQUEST) message to the AMF, to trigger a 5G core network (5G Core network, 5GC) to switch a downlink data path to the target gNB and establish a control plane interface between an NG-RAN and the 5GC (control plane interface between NG-RAN and 5GC) interface instance to the target gNB.

It should be understood that after S513, the target base station may perform S514 and S516 simultaneously, may perform S514 before S516, or may perform S516 before S514.

In S517, the 5GC switches the downlink data path to the target gNB.

Optionally, in S518, the UPF sends one or more end marker (End Marker) data packets on an old path of each PDU session/tunnel to the source gNB, and may then release any user-plane (U-plane)/TNL resource to the source gNB.

In S519, the AMF sends a path switch request acknowledge (PATH SWITCH REQUEST ACKNOWLEDGE) message to the target gNB to acknowledge the path switch request message.

In S520, after receiving the path switch request acknowledge message from the AMF, the target gNB sends a UE context release message to the source gNB to inform the source gNB that the handover succeeds. The source gNB may then release radio and control plane (C-plane)-related resources associated with the UE context.

After S519, in S521, the UPF performs unicasting, that is, sends a downlink service data packet only to the target gNB but not to the source gNB.

In S522, the target gNB processes the service data packet received from the UPF, to obtain a processed data packet, and then the target gNB sends the processed data packet to the UE.

In S523, the access stratum of the UE may process the received data packet based on an access stratum data packet sequence number, for example, sort data packets.

When the handover fails, in S513 ', the source gNB determines that the handover fails.

In S514 ', the source gNB sends a handover failure (Handover Failure) message to the AMF. The handover failure message may include an indication message indicating the AMF to deactivate or cancel the bi-casting mode. Alternatively, the handover failure message may not include the indication message, but after receiving the handover failure message, the AMF may change the bi-casting mode to a unicasting mode based on a definition of the handover failure message by a communication standard.

In S515', the AMF sends a second message to the UPF. The second message may include an information element in the handover failure message. The second message may be for requesting to deactivate or cancel the bi-casting mode. Alternatively, the second message may indicate to use the unicasting mode.

In S516', the UPF performs unicasting according to the second message, that is, sends a downlink service data packet only to the source gNB but not to the target gNB.

In S517', the source gNB processes the service data packet received from the UPF, to obtain a processed data packet, and then the source gNB sends the processed data packet to the UE.

In S518', the access stratum of the UE may process the received data packet based on an access stratum data packet sequence number, for example, sort data packets.

According to the foregoing embodiments, a delay introduced by data forwarding from the source base station to the target base station in the handover procedure is avoided, quality of service of a service provided by a network for the UE is ensured, a delay requirement of a delay-sensitive service is met, and so on.

The foregoing embodiments are specific embodiments for a handover scenario. This application further provides an active-standby network scenario or a non-claimed concurrent network scenario to support a high-reliability service.

In embodiments of this application, an active-standby network may include one active base station and one or more standby base stations. Both the active base station and the standby base station can receive service data from a core network (for example, a UPF), but the active base station sends the service data to the UE, and the standby base station sends the service data to the UE only after transitioning from a standby (standby) mode to an active mode. In the standby mode, when receiving the service data from the core network, the standby base station stores the service data for specific duration and deletes the service data if the standby base station is still in the standby mode when the specific duration expires. Further, the active base station and the standby base station may be adjacent base stations, for example, two base stations that are geographically close to each other.

In embodiments of this application, a concurrent network may include a plurality of base stations. Each base station may receive service data from a core network (for example, a UPF), and each base station may send the service data to UE. The plurality of base stations described herein may be adjacent base stations. A mode of each of the plurality of base stations may also be an active mode or a standby mode.

In either the active-standby network or the concurrent network, each serving base station of same UE needs to assign a same access stratum data packet sequence number (Sequence Number, SN) (for example, a PDCP layer data packet sequence number, or a PDCP layer data packet sequence number and an HFN) to a same downlink service data packet, so that the UE can concatenate data packets received from the serving base stations, to sort the data packets. For this, this application provides the following embodiments.

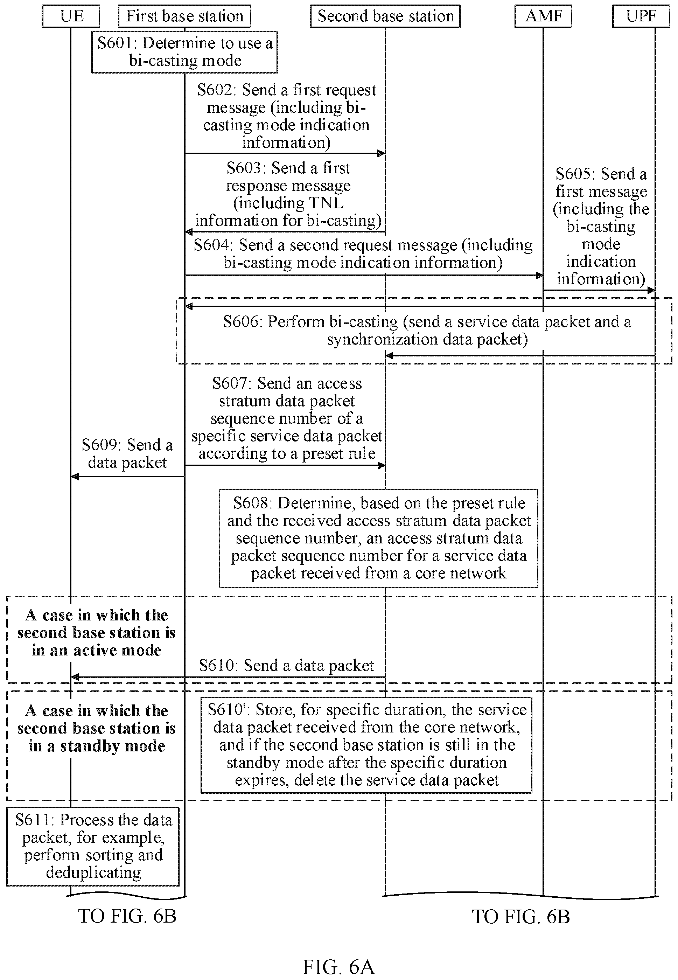

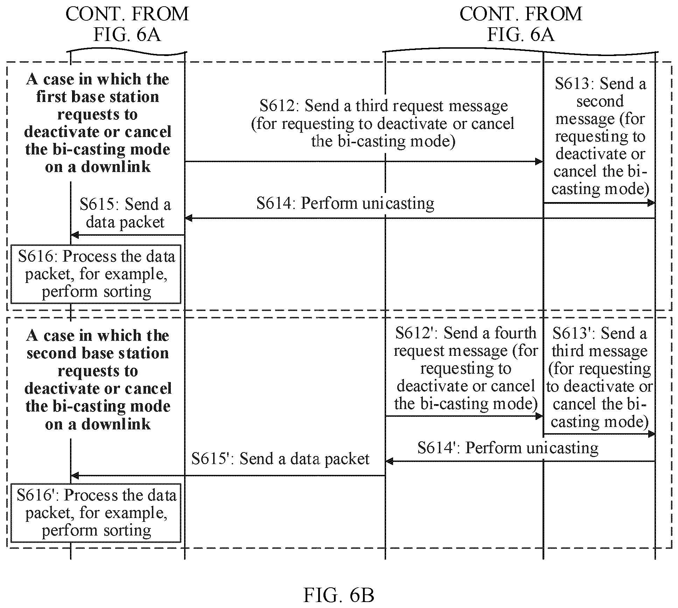

FIG. 6A and FIG. 6B are a time sequence diagram of a communication method according to the present invention. FIG. 6A and FIG. 6B further refine a core network to include a control plane entity and a user plane entity. In FIG. 6A and FIG. 6B, an example in which a control plane entity is an AMF and the user plane entity is a UPF is used to describe the embodiment of FIG. 6A and FIG. 6B. A first base station in FIG. 6A and FIG. 6B may be an active base station in an active-standby network and a second base station may be a standby base station in the active-standby network. Alternatively, the first base station and the second base station in FIG. 6A and FIG. 6B may be two base stations in a concurrent network.

As shown in FIG. 6A and FIG. 6B, in S601, the first base station determines to use a bi-casting mode. For example, when detecting a high-reliability transmission requirement, the first base station may determine to use the bi-casting mode.

The bi-casting mode in this embodiment of this application means that a core network (for example, a UPF) sends a same downlink service data packet to both the first base station and the second base station. That is, the first base station and the second base station receive the same downlink service data packet from the core network (for example, the UPF).

In S602, the first base station sends a first request message to the second base station. The first request message may include bi-casting mode indication information indicating that the bi-casting mode is used.

According to an example of this embodiment of this application, the bi-casting mode indication information may be associated with one or more service bearers of the UE. For example, the bi-casting mode indication information may be associated with identifiers of the one or more service bearers of the UE. In this way, bi-casting may be performed at a granularity of service bearer.

In this example, the first request message described above may include not only the bi-casting mode indication information, but also the identifiers of the one or more associated service bearers.

According to an example of this embodiment of this application, the first base station may further send mode indication information to the second base station. The mode indication information may indicate a mode of only the second base station, for example, indicate that the mode of the second base station is a standby mode or an active mode. The mode indication information may alternatively indicate a mode of the first base station and a mode of the second base station, for example, indicate that the mode of the first base station is an active mode and the mode of the second base station is a standby mode, or indicate that the mode of the first base station is an active mode and the mode of the second base station is an active mode.

The mode indication information may be included in the first request message, or may be included in another message for sending. This is not limited in this application.

In S603, the second base station sends a first response message to the first base station. The first response message may include transport network layer information for bi-casting.

The transport network layer information for bi-casting is used by the second base station to receive a downlink data packet from the core network in the bi-casting mode. In an example in which a wireless communication system uses a GPRS tunnel protocol-user plane (GPRS Tunnel Protocol-User plane, GTP-U) tunnel, the transport network layer information may be GTP tunnel endpoint (GTP Tunnel Endpoint) information. The GTP tunnel endpoint information may include a transport network layer address of the tunnel, an identifier of the tunnel, and the like. The GTP tunnel endpoint information may further include information that indicates tunnel usage.

It should be understood that in an example in which the wireless communication system uses another tunnel, the transport network layer information may include information related to the another tunnel.

In S604, the first base station sends a second request message to the AMF.

The second request message includes bi-casting mode indication information indicating to use the bi-casting mode. The second request message may further include the transport network layer information for bi-casting obtained by the first base station from the second base station. The second request message may further include transport network layer information for bi-casting of the first base station. The second request message may further include an identifier of the second base station. The second request message may further include identifiers of one or more service bearers associated with the bi-casting mode indication information. That is, the bi-casting mode may be per PDU session (session) or per EPS bearer (bearer).

In S605, the AMF sends a first message to the UPF. The first message may include an information element in the second request message.

In S606, the UPF performs bi-casting according to the first message.

Specifically, after receiving the first message, the UPF sends, to both the first base station and the second base station, a downlink service data packet that is originally sent only to the first base station. In addition, in a process in which the UPF sends the downlink service data packets to the first base station and the second base station in the bi-casting mode, the UPF sends synchronization data packets to the first base station and the second base station according to a first rule, to ensure that the first base station and the second base station assign a same access stratum data packet sequence number to a same downlink service data packet.

This step is similar to S306, and details are not described herein again.

In S607, after the first base station receives the synchronization data packet, the first base station sends, to the second base station according to a predefined second rule that is followed by both the first base station and the second base station, an access stratum data packet sequence number of a specific service data packet received from the UPF. This step is similar to S307, and details are not described herein again.

In S608, after the second base station receives the synchronization data packet, the second base station determines, based on the access stratum data packet sequence number received from the first base station and the second rule, an access stratum data packet sequence number for a downlink service data packet received from the UPF. This step is similar to S308, and details are not described herein again.

After S606, in S609, the first base station processes the service data packet received from the core network, to obtain a processed data packet. The first base station then sends the processed data packet to the UE. This step is similar to S309, and details are not described herein again.

After S608, if a mode of the second base station is an active mode, in S610, the second base station processes the service data packet received from the core network, to obtain a processed data packet. The second base station then sends the processed data packet to the UE. This step is similar to S309, and details are not described herein again.

After S608, if a mode of the second base station is a standby mode, in S610', the second base station stores, for specific duration, the service data packet received from the core network, and if the second base station is still in the standby mode after the specific duration expires, the second base station deletes the service data packet.

In S611, an access stratum of the UE may process the received data packet based on the access stratum data packet sequence number, for example, delete a duplicate data packet, and sort data packets. This step is similar to S310, and details are not described herein again.

The first base station or the second base station may request the AMF to deactivate or cancel the bi-casting mode when a high-reliability requirement is reduced or there is no high-reliability requirement.

In an example in which the first base station requests the AMF to deactivate or cancel the bi-casting mode, the first base station may perform step S612. In S612, the first base station sends a third request message to the AMF. The third request message may be for requesting to deactivate or cancel the bi-casting mode. Alternatively, the third request message may request to use a unicasting mode for the first base station or the second base station. Then, in S613, the AMF sends a second message to the UPF. The second message may include an information element in the third request message. The second message may be for requesting to deactivate or cancel the bi-casting mode. Alternatively, the second message may indicate to use a unicasting mode for the first base station or the second base station. Then, in S614, the UPF performs unicasting according to the second message, for example, sends a downlink service data packet only to the first base station but not to the second base station. In S615, the first base station processes the service data packet received from the UPF, to obtain a processed data packet, and then the first base station sends the processed data packet to the UE (shown in the figure). In S616, the access stratum of the UE may process the received data packet based on an access stratum data packet sequence number, for example, sort data packets.

Alternatively, in S614, the UPF performs unicasting according to the second message, for example, sends a downlink service data packet only to the second base station but not to the first base station. In S615, the second base station processes the service data packet received from the UPF, to obtain a processed data packet, and then the second base station sends the processed data packet to the UE (not shown in the figure).

In an example in which the second base station requests the AMF to deactivate or cancel the bi-casting mode, the second base station may perform step S612'. In S612', the second base station sends a fourth request message to the AMF. The fourth request message may be for requesting to deactivate or cancel the bi-casting mode. Alternatively, the fourth request message may request to use a unicasting mode for the first base station or the second base station. Then, in S613', the AMF sends a third message to the UPF. The third message may include an information element in the fourth request message. The third message may be for requesting to deactivate or cancel the bi-casting mode. Alternatively, the third message may indicate to use a unicasting mode for the first base station or the second base station. Then, in S614', the UPF performs unicasting according to the third message, for example, sends a downlink service data packet only to the second base station but not to the first base station. In S615', the second base station processes the service data packet received from the UPF, to obtain a processed data packet, and then the second base station sends the processed data packet to the UE (shown in the figure). In S616', the access stratum of the UE may process the received data packet based on an access stratum data packet sequence number, for example, sort data packets.

Alternatively, in S614', the UPF performs unicasting according to the third message, for example, sends a downlink service data packet only to the first base station but not to the second base station. In S615', the first base station processes the service data packet received from the UPF, to obtain a processed data packet, and then the first base station sends the processed data packet to the UE (not shown in the figure).

According to the foregoing steps, because service data reaches two base stations from the core network through two communication links, even if a path failure or a device failure occurs on one of the communication links, the service data on the other communication link can still reach the UE. This improves reliability of a transport network. Furthermore, even if one base station fails, the other base station is normal, or communication quality of one communication link is degraded but communication quality of the other communication link is not degraded. This improves reliability of the base stations and air interfaces. Although two communication links are redundant compared with one communication link, the access stratum of the UE can deduplicate the received data packets according to the access stratum data packet sequence numbers, to effectively ensure high reliability of a service.

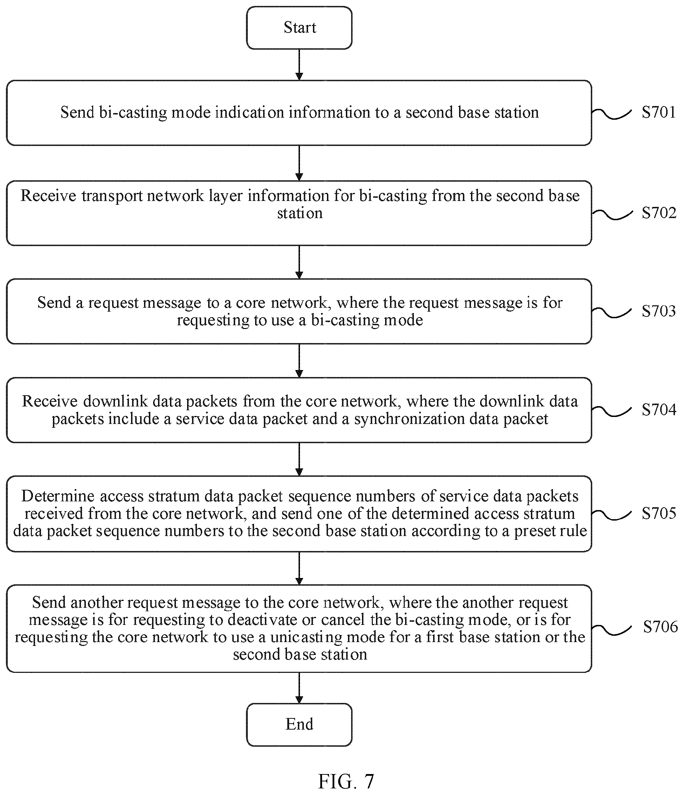

FIG. 7 is a flowchart of a method 700 performed by a base station according to an embodiment of this application. The base station may be the source base station in the handover scenario, or the first base station in the active-standby network or concurrent network. The method 700 includes steps S701 to S706.

In S701, the first base station sends bi-casting mode indication information to a second base station. The bi-casting mode indication information indicates that a bi-casting mode is used. This step is similar to step S303 described with reference to FIG. 3A, step S403 described with reference to FIG. 4A and FIG. 4B, step S504 described with reference to FIG. 5A and FIG. 5B, or step S602 described with reference to FIG. 6A and FIG. 6B, and details are not described herein again.

In S702, the first base station receives transport network layer information for bi-casting from the second base station. This step is similar to step S304 described with reference to FIG. 3A, or step S404 described with reference to FIG. 4A and FIG. 4B, step S506 described with reference to FIG. 5A and FIG. 5B, or step S603 described with reference to FIG. 6A and FIG. 6B, and details are not described herein again.

In S703, the first base station sends a request message to a core network, where the request message is for requesting to use the bi-casting mode.

The request message may include bi-casting mode indication information. The request message may further include the transport network layer information for bi-casting obtained by the first base station from the second base station. The request message may further include transport network layer information for bi-casting of the first base station. The request message may further include an identifier of the second base station, and/or an identifier of the first base station. The request message may further include identifiers of one or more service bearers associated with the bi-casting mode indication information.

This step is similar to step S305 described with reference to FIG. 3A, steps S405 and S406 described with reference to FIG. 4A and FIG. 4B, steps S508 and S509 described with reference to FIG. 5A and FIG. 5B, or steps S604 and S605 described with reference to FIG. 6A and FIG. 6B, and details are not described herein again.

In S704, the first base station receives downlink data packets from the core network, where the downlink data packets include a service data packet and a synchronization data packet.

This step is similar to step S306 described with reference to FIG. 3A, step S407 described with reference to FIG. 4A and FIG. 4B, step S510 described with reference to FIG. 5A and FIG. 5B, or step S606 described with reference to FIG. 6A and FIG. 6B, and details are not described herein again.

In S705, after receiving the synchronization data packet, the first base station determines access stratum data packet sequence numbers of service data packets received from the core network, and sends at least one of the determined access stratum data packet sequence numbers of the service data packets to the second base station according to a preset rule, so that the second base station determines, based on the synchronization data packet and the preset rule, an access stratum data packet sequence number for a downlink service data packet received from the core network.

This step is similar to step S307 described with reference to FIG. 3A, step S408 described with reference to FIG. 4A and FIG. 4B, step S511 described with reference to FIG. 5A and FIG. 5B, or step S607 described with reference to FIG. 6A and FIG. 6B, and details are not described herein again.

In S706, the first base station sends another request message to the core network. The another request message is for requesting to deactivate or cancel the bi-casting mode. Alternatively, the another request message is for requesting the core network to use a unicasting mode for the first base station or the second base station.

This step is similar to step S311 or S311' described with reference to FIG. 3A, step S412 or S412' described with reference to FIG. 4A and FIG. 4B, step S521 described with reference to FIG. 5A and FIG. 5B, or step S612 or S612' described with reference to FIG. 6A and FIG. 6B, and details are not described herein again.

According to the method 700 shown in FIG. 7, the first base station can request the core network to perform bi-casting as required, and request to exit the bi-casting mode when a requirement is reduced or there is no requirement, and during bi-casting, the first base station and the second base station can assign a same access stratum data packet sequence number to a service data packet, to ensure service continuity.

As described in the foregoing embodiment, the synchronization data packet may be a GTP-U (GPRS Tunnel Protocol-User plane, GPRS tunnel protocol-user plane) data packet. In this case, a header of the synchronization data packet may be a header of the GTP-U data packet. That is, the header of the GTP-U data packet indicates that the data packet is a synchronization data packet. For example, the header of the GTP-U data packet may include an SN sequence number (for example, 1) to indicate that the data packet is a synchronization data packet. When both the first base station and the second base station receive the data packet from the core network, the SN sequence number can be obtained by parsing the header of the data packet and can determine, based on the SN sequence number, that the data packet is a synchronization data packet.

In this example, when the first base station receives the data packet, the first base station may assign an access stratum data packet sequence number (for example, 10) to the data packet. The first base station may then notify the second base station of the SN sequence number (for example, 1) and the access stratum data packet sequence number (for example, 10). Accordingly, the second base station may assign the access stratum data packet sequence number notified by the first base station to the data packet that is received from the core network and has the SN sequence number notified by the first base station.

The foregoing embodiments are embodiments in which the bi-casting mode is applied to a downlink. This application further provides an embodiment in which the bi-casting mode is applied to an uplink. In this embodiment, the UE has a capability to establish a communication protocol stack for each of the first base station and the second base station.

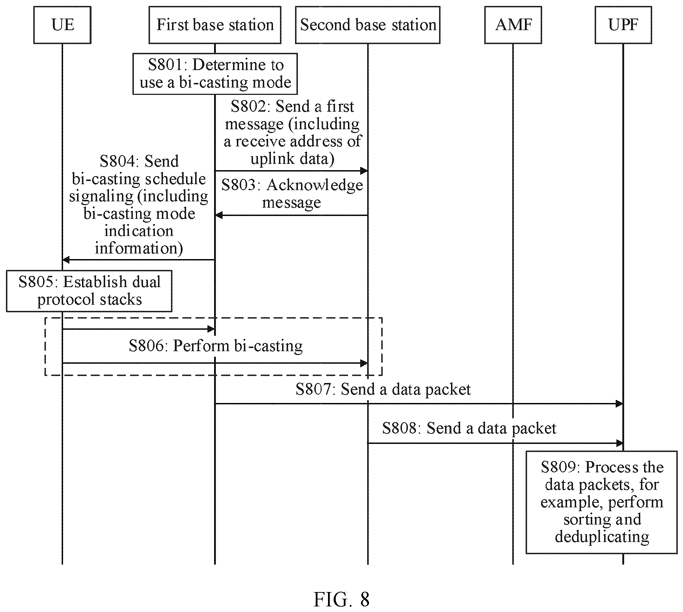

FIG. 8 is a time sequence diagram of a communication method according to still another embodiment of this application. FIG. 8 refines a core network to include a control plane entity and a user plane entity. In FIG. 8, an example in which a control plane entity is an AMF and the user plane entity is a UPF is used to describe the embodiment of FIG. 8. A first base station in FIG. 8 may be an active base station in an active-standby network, and a second base station may be a standby base station in the active-standby network. Alternatively, the first base station and the second base station in FIG. 8 may be two base stations in a concurrent network. Alternatively, the first base station in FIG. 8 may be a source base station, and the second base station may be a target base station.

As shown in FIG. 8, in S801, the first base station determines to use a bi-casting mode. For example, when detecting that uplink communication quality of UE is poor, the first base station may determine to use the bi-casting mode.

In S802, the first base station sends a first message to the second base station. The first message may include a receive address of uplink data, for example, an address used by the UPF to receive the uplink data. Subsequently, the second base station may send the uplink data received from the UE to the UPF based on the receive address of the uplink data.

Optionally, in S803, the second base station sends an acknowledge (acknowledge) message for the first message to the first base station.

In S804, the first base station sends bi-casting schedule signaling to the UE. The bi-casting schedule signaling includes bi-casting indication information indicating to use the bi-casting mode. The bi-casting schedule signaling may further include an identifier (ID) of the second base station.

In addition, the bi-casting mode indication information may be associated with one or more service bearers of the UE. For example, the bi-casting mode indication information may be associated with identifiers of the one or more service bearers of the UE. In this way, bi-casting may be performed at a granularity of service bearer. In this case, the bi-casting schedule signaling may include not only the bi-casting mode indication information, but also the identifiers of the one or more associated service bearers.

In S805, the UE establishes a communication protocol stack for each of the first base station and the second base station.

In S806, the UE performs bi-casting, that is, sends a same uplink data packet to the first base station and the second base station. The uplink data packet may be a service data packet, service data, a user data packet, user data, or the like.

After S806, in S807, the first base station processes the uplink data packet received from the UE, to obtain a processed data packet. The first base station then sends the processed data packet to the UPF.

The processing may be, for example, adding a new header, and encapsulating the service data packet into a new data packet, and a header of the new data packet includes a corresponding access stratum data packet sequence number. The new data packet may be, for example, a GTP-U data packet, and the new header may be, for example, a GTP-U extension header (GTP-U extension header).

After S806, in S808, the second base station processes the uplink data packet received from the UE, to obtain a processed data packet. The second base station then sends the processed data packet to the UPF. The processing is similar to the processing in S807, and details are not described herein again.

In S809, the UPF processes the data packets received from the first base station and the second base station. The processing may be, for example, deleting a duplicate data packet (that is, deduplicating) and ordering the data packets based on the access stratum data packet sequence numbers in the data packet headers.

When there is no need for bi-casting, the first base station or the second base station may transmit bi-casting deactivation or cancellation signaling to the UE, to indicate the UE to deactivate or cancel bi-casting or indicate the UE to use a unicasting mode. Alternatively, the UE may determine to deactivate or cancel bi-casting. Accordingly, a header of a data packet sent by the first base station or the second base station to the UPF may not include an access stratum data packet sequence number.

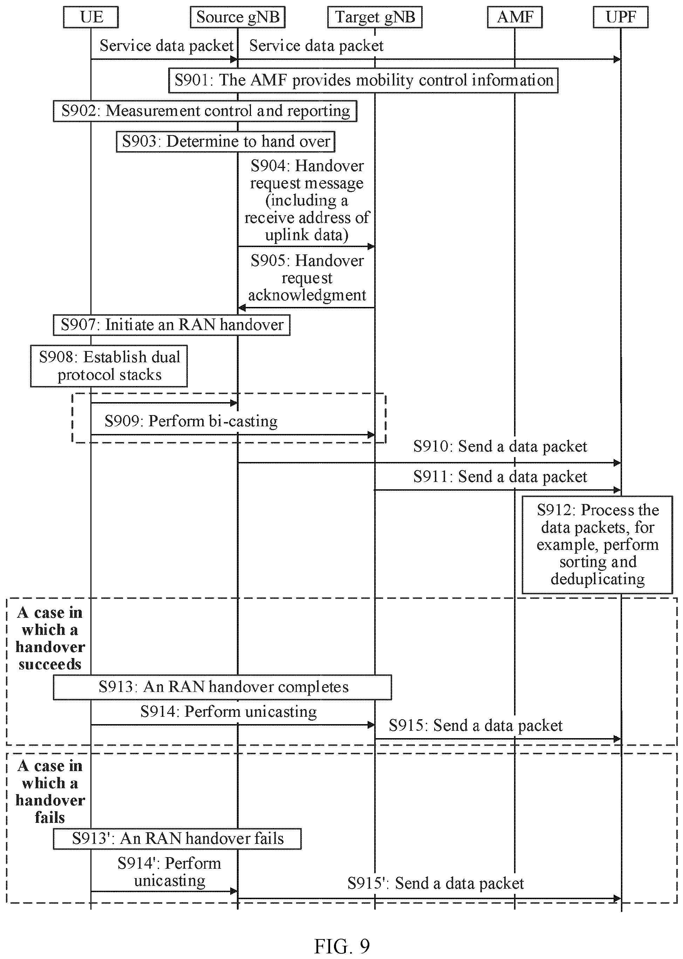

FIG. 9 is a time sequence diagram of a communication method according to yet another embodiment of this application. The main difference between FIG. 9 and FIG. 8 is that FIG. 9 further refines an application scenario, and the application scenario is a dual active protocol stack handover (Dual Active Protocol Stack Hand Over, DAPS HO) scenario in a 5G wireless communication system. A first base station in FIG. 9 may be a source base station, and a second base station may be a target base station.

As shown in FIG. 9, before a serving base station of UE is handed over from the source gNB to the target gNB, the UE sends a service data packet to the source gNB, and the source gNB then sends the service data packet to a UPF. As described above, in this embodiment of this application, the service data packet may also be referred to as service data, user data (user data), a user data packet, or the like.

In S901, an AMF provides mobility control information (mobility control information) to the source gNB. A UE context in the source gNB includes information about roaming and access restrictions, and these information is provided during connection establishment or last tracking area (Tracking Area, TA) update.

In S902, the source gNB configures a UE measurement procedure and the UE performs reporting based on the measurement configuration.

In S903, the source gNB determines to hand over the serving base station of the UE based on a measurement report and radio resource management (Radio Resource Management, RRM) information.

In S904, the source gNB sends a handover request message (Handover Request message) to the target gNB, where the handover request message includes information required to prepare a handover on a target side. The handover request message includes, for example, a receive address of uplink data, for example, an address used by the UPF to receive the uplink data. Subsequently, the target gNB may send the uplink data received from the UE to the UPF based on the receive address of the uplink data.

The target gNB may indicate whether a DAPS handover is accepted. If the DAPS handover is accepted, in S905, the target gNB sends a handover request acknowledgment (Handover Request Acknowledge) to the source gNB.

After S905, in S907, the source gNB triggers a Uu handover by sending an RRCReconfiguration message to the UE. The message includes, for example, bi-casting schedule signaling. The bi-casting schedule signaling includes bi-casting indication information indicating to use a bi-casting mode. The bi-casting schedule signaling may further include an identifier (ID) of the second base station.

The message may further include information required to access a target cell: an identifier (ID) of the target cell, a new C-RNTI, and a target gNB security algorithm identifier for a selected security algorithm. The message may further include a dedicated set of RACH resources, an association between RACH resources and SSBs, an association between RACH resources and LTE-specific CSI-RS configurations, common RACH resources, system information of the target cell, and the like.

In S908, the UE establishes a communication protocol stack for each of the source gNB and the target gNB.

In S909, the UE performs bi-casting, that is, sends same uplink data packets to the source gNB and the target gNB.

After S909, in S910, the source gNB processes the uplink data packet received from the UE, to obtain a processed data packet. The source gNB then sends the processed data packet to the UPF.

The processing may be, for example, adding a new header, and encapsulating the service data packet into a new data packet, and a header of the new data packet includes a corresponding access stratum data packet sequence number. The new data packet may be, for example, a GTP-U data packet, and the new header may be, for example, a GTP-U extension header (GTP-U extension header).

After S909, in S911, the target gNB processes the uplink data packet received from the UE, to obtain a processed data packet. The target gNB then sends the processed data packet to the UPF. The processing is similar to the processing in S910, and details are not described herein again.

In S912, the UPF processes the data packets received from the source gNB and the target gNB. The processing may be, for example, deleting a duplicate data packet (that is, deduplicating) and ordering the data packets based on the access stratum data packet sequence numbers in the data packet headers.

When the handover succeeds, in S913, the UE synchronizes with the target cell and completes an RRC handover procedure by sending an RRCReconfigurationComplete message to the target gNB. In addition, through S913, the UE implicitly informs the target gNB that the UE is to deactivate or cancel the bi-casting mode, or is to use a unicasting mode.

Then, in S914, the UE performs unicasting for the target gNB.

Then, in S915, the target gNB processes an uplink data packet received from the UE, to obtain a processed data packet. The target gNB then sends the processed data packet to the UPF. The processing may not include: including an access stratum data packet sequence number in the data packet header.

When the handover fails, in S913 ', the source gNB determines that the handover fails.

Then, in S914', the UE performs unicasting for the source gNB.

Then, in S915', the source gNB processes an uplink data packet received from the UE, to obtain a processed data packet. The source gNB then sends the processed data packet to the UPF. The processing may not include: including an access stratum data packet sequence number in the data packet header.

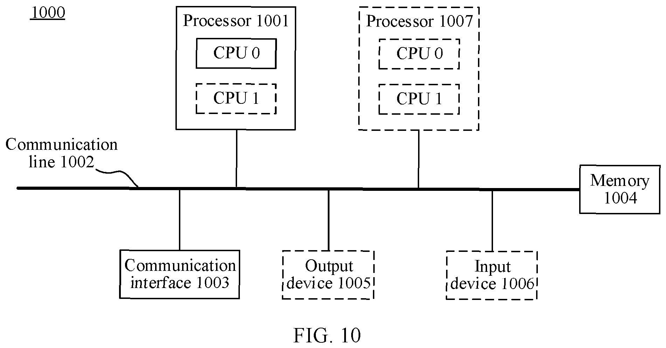

According to the embodiment shown in FIG. 9, a delay introduced by data forwarding of an uplink data packet from the source base station to the target base station in the handover procedure can be avoided, quality of service of a service provided by a network for the UE is ensured, a delay requirement of a delay-sensitive service is met, and so on. A base station or a core network element in the foregoing embodiments of this application may use a composition structure shown in FIG. 10 or include components shown in FIG. 10. FIG. 10 is a diagram of a structure of a communication apparatus 1000 according to an embodiment of this application. As shown in FIG. 10, the communication device 1000 includes one or more processors 1001, a communication line 1002, and at least one communication interface (FIG. 10 is described only by using an example in which a communication interface 1003 and one processor 1001 are included), and optionally, may further include a memory 1004.

The processor 1001 may be a general-purpose central processing unit (central processing unit, CPU), a microprocessor, an application-specific integrated circuit (application-specific integrated circuit, ASIC), or one or more integrated circuits configured to control execution of a program in the solutions of this application.

The communication line 1002 may include a channel used for communication between different components.

The communication interface 1003 may be a transceiver module, configured to communicate with another device or a communication network such as the Ethernet, wireless local area networks (wireless local area networks, WLAN), and the like. For example, the transceiver module may be an apparatus such as a transceiver or a transceiver machine. Optionally, the communication interface 1003 may alternatively be a transceiver circuit located in the processor 1001 to implement signal input and signal output of the processor.

The memory 1004 may be an apparatus having a storage function. For example, the memory may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Blu-ray disc, or the like), a disk storage medium or another magnetic storage device, or any other medium that can be used to carry or store expected program code in a form of instructions or a data structure and that can be accessed by a computer. However, the memory is not limited thereto. The memory may exist independently, and is connected to the processor through the communication line 1002. The memory may be alternatively integrated with the processor.

The memory 1004 is configured to store computer-executable instructions for executing the solutions of this application, and the processor 1001 controls execution of the computer-executable instructions. The processor 1001 is configured to execute the computer-executable instructions stored in the memory 1004 to implement the communication method provided in embodiments of this application.

Alternatively, optionally, in the embodiments of this application, the processor 1001 may perform processing related functions in the communication method provided in the following embodiments of this application, and the communication interface 1003 is responsible for communication with another device or a communication network. This is not specifically limited in this embodiment of this application.

Optionally, the computer-executable instructions in this embodiment of this application may also be referred to as application code. This is not specifically limited in this embodiment of this application.

During specific implementation, in an embodiment, the processor 1001 may include one or more CPUs, for example, a CPU0 and a CPU1 in FIG. 10.

During specific implementation, in an embodiment, the communication device 1000 may include a plurality of processors, for example, the processor 1001 and a processor 1007 in FIG. 10. Each of the processors may be a single-core (single-core) processor, or may be a multi-core (multi-core) processor. The processor herein may include, but is not limited to, at least one of the following: various types of computing devices that run software, such as a central processing unit (central processing unit, CPU), a microprocessor, a digital signal processor (DSP), a microcontroller unit (microcontroller unit, MCU), or an artificial intelligence processor. Each computing device may include one or more cores for executing software instructions to perform operations or processing.

In a specific implementation, in an embodiment, the communication device 1000 may further include an output device 1005 and an input device 1006. The output device 1005 communicates with the processor 1001, and may display information in a plurality of manners. For example, the output device 1005 may be a liquid crystal display (liquid crystal display, LCD), a light emitting diode (light emitting diode, LED) display, a cathode ray tube (cathode ray tube, CRT) display, a projector (projector), or the like. The input device 1006 communicates with the processor 1001, and may receive an input from a user in a plurality of manners. For example, the input device 1006 may be a mouse, a keyboard, a touchscreen device, or a sensor device.

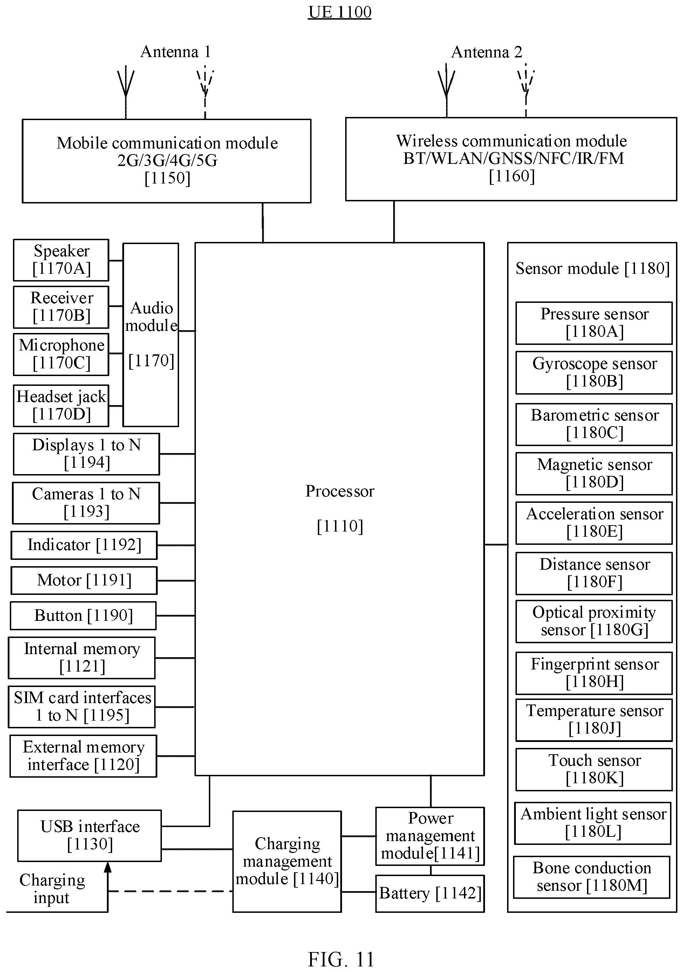

FIG. 11 is a diagram of a hardware structure of UE according to an embodiment of this application. As shown in FIG. 11, the UE 1100 may include a processor 1110, an external memory interface 1120, an internal memory 1121, a universal serial bus (universal serial bus, USB) interface 1130, a charging management module 1140, a power management module 1141, a battery 1142, an antenna 1, an antenna 2, a mobile communication module 1150, a wireless communication module 1160, an audio module 1170, a speaker 1170A, a receiver 1170B, a microphone 1170C, a headset jack 1170D, a sensor module 1180, a button 1190, a motor 1191, an indicator 1192, a camera 1193, a display 1194, a SIM card interface 1195, and the like. The sensor module 1180 may include a pressure sensor 1180A, a gyroscope sensor 1180B, a barometric pressure sensor 1180C, a magnetic sensor 1180D, an acceleration sensor 1180E, a distance sensor 1180F, an optical proximity sensor 1180G, a fingerprint sensor 1180H, a temperature sensor 1180J, a touch sensor 1180K, an ambient light sensor 1180L, a bone conduction sensor 1180M, and the like.

It may be understood that the structure shown in FIG. 11 does not constitute a specific limitation on the UE. In some other embodiments of this application, the UE may include more or fewer components than those shown in the figure, or some components may be combined, or some components may be split, or components are arranged in different manners. The components shown in the figure may be implemented by using hardware, software, or a combination of software and hardware.

The processor 1110 may include one or more processing units. For example, the processor 1110 may include an application processor (Application Processor, AP), a modem (Modem), a graphics processing unit (Graphics Processing Unit, GPU), an image signal processor (Image Signal Processor, ISP), a controller, a video codec, a digital signal processor (Digital Signal Processor, DSP), a baseband processor, and/or a neural-network processing unit (Neural-network Processing Unit, NPU). Different processing units may be independent components, or may be integrated into one or more processors.

The charging management module 1140 is configured to receive a charging input from a charger. The charger may be a wireless charger or a wired charger.

The power management module 1141 is configured to connect the battery 1142 and the charging management module 1140 to the processor 1110. The power management module 1141 receives an input of the battery 1142 and/or the charging management module 1140, and supplies power to the processor 1110, the internal memory 1121, the display 1194, the camera 1193, the wireless communication module 1160, and the like.

A wireless communication function of the UE may be implemented through the antenna 1, the antenna 2, the mobile communication module 1150, the wireless communication module 1160, the modem, the baseband processor, and the like.

The antenna 1 and the antenna 2 are configured to transmit and receive electromagnetic wave signals. Each antenna in the UE may be configured to cover one or more communication frequency bands. Different antennas may further be multiplexed to improve utilization of the antennas.

The mobile communication module 1150 may provide a wireless communication solution that is applied to the UE and that includes 2G/3G/4G/5G and the like.

The wireless communication module 1160 may provide wireless communication solutions applied to the UE, including a wireless local area network (Wireless Local Area Networks, WLAN) (such as a Wi-Fi network), Bluetooth (Bluetooth, BT), a global navigation satellite system (Global Navigation Satellite System, GNSS), frequency modulation (Frequency Modulation, FM), a near field communication (Near Field Communication, NFC) technology, an infrared technology, and the like. The wireless communication module 1160 may be one or more components that integrate at least one communication processing module. The wireless communication module 1160 receives an electromagnetic wave by using the antenna 2, performs frequency modulation and filtering processing on an electromagnetic wave signal, and sends a processed signal to the processor 1110. The wireless communication module 1160 may further receive a to-be-sent signal from the processor 1110, perform frequency modulation and amplification on the signal, and convert the signal into an electromagnetic wave for radiation through the antenna 2.

In some embodiments, in an example in which the wireless communication module 1160 provides Bluetooth communication, the wireless communication module 1160 may be specifically a Bluetooth chip. The Bluetooth chip may include one or more memories, one or more processors, and the like. The processor in the Bluetooth chip may perform operations such as frequency modulation, filtering, operation, and determining on the electromagnetic wave received through the antenna 2, and convert a processed signal into an electromagnetic wave for radiation through the antenna 2, that is, no processing needs to be performed by the processor 1110.

The UE implements a display function through the GPU, the display 1194, the application processor, and the like. The GPU is a microprocessor for image processing and is connected to the display 1194 and the application processor.

The display 1194 is configured to display an image, a video, or the like. A series of graphical user interfaces (Graphical User Interface, GUI) may be displayed on the display 1194 of the UE.

The UE may implement a photographing function through the ISP, the camera 1193, the video codec, the GPU, the display 1194, the application processor, and the like.

The camera 1193 is configured to capture a static image or a video.

The external memory interface 1120 may be configured to connect an external storage card such as a micro SD card, to extend a storage capability of the UE 1101.

The internal memory 1121 may be configured to store computer-executable program code. The executable program code includes instructions. The processor 1110 runs the instructions stored in the internal memory 1121, to perform various function applications and data processing of the UE.

The UE may implement an audio function such as music playing or recording by using the audio module 1170, the speaker 1170A, the receiver 1170B, the microphone 1170C, the headset jack 1170D, the application processor, and the like.

The SIM card interface 1195 is configured to connect a SIM card. The SIM card may be inserted into the SIM card interface 1195 or detached from the SIM card interface 1195, to implement contact with or separation from the UE. The UE may support one or N SIM card interfaces, where N is a positive integer greater than 1. The SIM card interface 1195 may support a Nano SIM card, a Micro SIM card, a SIM card, and the like. A plurality of cards may be inserted into a same SIM card interface 1195 at the same time. The SIM card interface 1195 may further be compatible with an external memory card. The UE interacts with a network through the SIM card, to implement functions such as a call and data communication.

On the foregoing components, an operating system runs, for example, a Harmony operating system, an iOS operating system, an Android operating system, or a Windows (windows) operating system. An application may be installed and run on the operating system. In some other embodiments, there may be a plurality of operating systems running on the UE.

An embodiment of this application further provides a computer-readable storage medium. The computer-readable storage medium includes instructions, and when the instructions are run on an electronic device, the electronic device is enabled to perform related method steps in the foregoing embodiments, to perform the methods in the foregoing embodiments.

An embodiment of this application further provides a computer program product including instructions. When the computer program product runs on an electronic device, the electronic device is enabled to perform related method steps in the foregoing embodiments, to perform the methods in the foregoing embodiments.

An embodiment of this application further provides a terminal. The terminal includes a processor and a memory. The memory is configured to store computer program code. The computer program code includes computer instructions. When the processor executes the computer instructions, the terminal performs related method steps in the foregoing embodiments, to perform the methods in the foregoing embodiments. The terminal may be an integrated circuit IC or a system-on-chip SOC. The integrated circuit may be a general-purpose integrated circuit, or may be a field programmable gate array FPGA, or may be an application-specific integrated circuit ASIC.

In the several embodiments provided in this application, it should be understood that the disclosed system, apparatus, and method may be implemented in other manners. For example, the described apparatus embodiment is merely an example. For example, the module or unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separated, and components displayed as units may or may not be physical units, and may be located in one place or may be distributed over a plurality of network units. Some or all of the units may be selected depending on actual requirements to achieve the objectives of the solutions in the embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the embodiments essentially, or the part contributing to the related art, or all or some of the technical solutions may be implemented in the form of a software product. The computer software product is stored in a storage medium and includes several instructions for instructing a computer device (which may be a personal computer, a server, a network device, or the like) or a processor to perform all or some of the steps of the methods described in the embodiments. The storage medium includes: any medium that can store program code, such as a flash memory, a removable hard disk, a read-only memory, a random access memory, a magnetic disk, or a compact disc.

The foregoing descriptions are merely specific embodiments of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A communication system, comprising a first base station (302-1), a second base station (302-2), and a core network (303), wherein
the first base station (302-1) is configured to send (S604) a first request message to the core network (303), wherein the first request message is for requesting to send a data packet in a bi-casting mode, and the bi-casting mode is a transmission mode in which the core network (303) sends a same data packet to each of the first base station (302-1) and the second base station (302-2); and
the core network (303) is configured to: after receiving the first request message, send (S606) one or more data packets to the first base station (302-1) and the second base station (302-2) in the bi-casting mode,
**characterized in that** the first base station (302-1) and the second base station (302-2) are two base stations in an active-standby network, wherein the first base station is in active mode and the second base station is in standby mode.

2. The communication system according to claim 1, wherein before the first base station sends the first request message to the core network,
the first base station (302-1) is further configured to send (S602) a second request message to the second base station (302-2), wherein the second request message is for requesting transport network layer information for bi-casting; and
in response to the second request message, the second base station (302-2) is configured to send (S304) the transport network layer information for bi-casting to the first base station (302-1).

3. The communication system according to claim 2, wherein
the second request message comprises first indication information, and the first indication information indicates the core network (303) to send a data packet in the bi-casting mode.

4. The communication system according to claim 3, wherein
the first request message comprises second indication information, an identifier of the second base station, and the transport network layer information for bi-casting, and the second indication information indicates the core network (303) to send a data packet in the bi-casting mode.

5. The communication system according to any one of claims 1 to 4, wherein
the one or more data packets comprise a service data packet and a synchronization data packet; and
the first base station (302-1) and the second base station (302-2) determine a same access stratum data packet sequence number for a same service data packet based on the synchronization data packet and a preset rule,
wherein that the first base station (302-1) and the second base station (302-2) determine a same access stratum data packet sequence number for a same service data packet based on the synchronization data packet and a preset rule comprises:
the first base station (302-1) determines access stratum data packet sequence numbers of service data packets received by the first base station from the core network (303), and sends (S607) one of the determined access stratum data packet sequence numbers to the second base station based on the synchronization data packet and the preset rule; and
the second base station (302-2) determines (S608), based on the synchronization data packet, the preset rule, and the access stratum data packet sequence number received from the first base station, an access stratum data packet sequence number for a service data packet received by the second base station from the core network (303).

6. The communication system according to claim 5, wherein
the preset rule is that the first base station (302-1) sends an access stratum data packet sequence number of a previous service data packet or a previous M^{th} service data packet arranging from the synchronization data packet to the second base station (302-2), wherein M is a positive integer greater than 1; or
the preset rule is that the first base station (302-1) sends an access stratum data packet sequence number of a first service data packet or an N^{th} service data packet following the synchronization data packet to the second base station (302-2), wherein N is a positive integer greater than 1; or
the preset rule is that the first base station (302-1) sends an access stratum data packet sequence number of the synchronization data packet to the second base station (302-2).

7. The communication system according to any one of claims 5 to 6, wherein
the synchronization data packet is a general packet radio service tunnel protocol GTP user plane data packet, and a header of the GTP user plane data packet indicates that the GTP user plane data packet is a synchronization data packet.

8. The communication system according to any of claims 1-7, wherein
the second base station sends (S612') a third request message to the core network,
wherein the third request message is for requesting to deactivate or cancel the bi-casting mode, or the third request message is for requesting the core network (303) to use a unicasting mode for the second base station.

9. The communication system according to any of claims 1-7, wherein the first base station sends (S612) a fourth request message to the core network (303), wherein the fourth request message is for requesting to deactivate or cancel the bi-casting mode, or the fourth request message is for requesting the core network (303) to use a unicasting mode for the first base station.

10. The communication system according to any one of claims 1 to 9 wherein
the core network (303) comprises an access management function AMF entity and a user plane function UPF entity;
that the first base station sends the first request message to the core network comprises:
the first base station (302-1) sends ( S604) the first request message to the AMF entity; and
the AMF entity sends (
S605) a first message to the UPF entity, wherein the first message is for requesting to send a data packet in the bi-casting mode;
that the core network sends one or more data packets to the first base station and the second base station in the bi-casting mode comprises:
the UPF entity sends ( S606) the one or more data packets to the first base station (302-1) and the second base station (302-2) in the bi-casting mode;
that the second base station sends the third request message to the core network comprises:
the second base station (302-2) sends (S612') the third request message to the AMF entity or
that the first base station sends the fourth request message to the core network comprises:
the first base station (302-1) sends (S612) the fourth request message to the AMF entity.

## Patentansprüche

1. Ein Kommunikationssystem, umfassend eine erste Basisstation (302-1), eine zweite Basisstation (302-2) und ein Kernnetz (303), wobei
die erste Basisstation (302-1) dazu konfiguriert ist, (S604) eine erste Anforderungsnachricht an das Kernnetz (303) zu senden, wobei die erste Anforderungsnachricht die Anforderung zur Übertragung eines Datenpakets im Bikasting-Modus betrifft und der Bikasting-Modus ein Übertragungsmodus ist, in dem das Kernnetz (303) ein identisches Datenpaket sowohl an die erste Basisstation (302-1) als auch an die zweite Basisstation (302-2) sendet; und
das Kernnetz (303) dazu konfiguriert ist: nach dem Empfang der ersten Anforderungsnachricht (S606) ein oder mehrere Datenpakete im Bikasting-Modus an die erste Basisstation (302-1) und die zweite Basisstation (302-2) zu senden,
**dadurch gekennzeichnet, dass** die erste Basisstation (302-1) und die zweite Basisstation (302-2) zwei Basisstationen in einem Aktiv-Standby-Netzwerk sind, wobei sich die erste Basisstation im Aktivmodus und die zweite Basisstation im Standbymodus befindet.

2. Das Kommunikationssystem nach Anspruch 1, wobei vor dem Senden der ersten Anforderungsnachricht an das Kernnetz durch die erste Basisstation,
die erste Basisstation (302-1) weiterhin dazu konfiguriert ist, (S602) eine zweite Anforderungsnachricht an die zweite Basisstation (302-2) zu senden, wobei die zweite Anforderungsnachricht die Anforderung von Transportnetzschichtinformationen für Bikasting betrifft; und
als Antwort auf die zweite Anforderungsnachricht ist die zweite Basisstation (302-2) dazu konfiguriert, (S304) die Transportnetzschichtinformationen für Bikasting an die erste Basisstation (302-1) zu senden.

3. Das Kommunikationssystem nach Anspruch 2, wobei
die zweite Anforderungsnachricht erste Indikationsinformationen enthält, wobei die ersten Indikationsinformationen das Kernnetz (303) anweisen, ein Datenpaket im Bikasting-Modus zu senden.

4. Das Kommunikationssystem nach Anspruch 3, wobei
die erste Anforderungsnachricht zweite Indikationsinformationen, einen Identifikator der zweiten Basisstation und die Transportnetzschichtinformationen für Bikasting enthält, und die zweiten Indikationsinformationen das Kernnetz (303) anweisen, ein Datenpaket im Bikasting-Modus zu senden.

5. Das Kommunikationssystem nach einem der Ansprüche 1 bis 4, wobei
die ein oder mehrere Datenpakete ein Dienstdatenpaket und ein Synchronisationsdatenpaket umfassen; und
die erste Basisstation (302-1) und die zweite Basisstation (302-2) basierend auf dem Synchronisationsdatenpaket und einer vorgegebenen Regel die gleiche Zugriffsstratum-Datenpaket-Seriennummer für ein gleiches Dienstdatenpaket bestimmen,
wobei die erste Basisstation (302-1) und die zweite Basisstation (302-2) für ein gleiches Dienstdatenpaket anhand des Synchronisierungsdatenpakets und einer vorgegebenen Regel dieselbe Sequenznummer des Zugriffsstratum-Datenpakets bestimmen, umfasst:
die erste Basisstation (302-1) bestimmt die Sequenznummern der Zugriffsstratum-Datenpakete der von der ersten Basisstation aus dem Kernnetz (303) empfangenen Dienstdatenpakete und sendet (S607) eine der bestimmten Sequenznummern für Zugriffsstratum-Datenpakete basierend auf dem Synchronisierungsdatenpaket und der vorgegebenen Regel an die zweite Basisstation; und
die zweite Basisstation (302-2) bestimmt (S608) basierend auf dem Synchronisierungsdatenpaket, der vorgegebenen Regel und der von der ersten Basisstation empfangenen Sequenznummer für Zugriffsstratum-Datenpakete eine Sequenznummer für ein von der zweiten Basisstation aus dem Kernnetz (303) empfangenes Dienstdatenpaket.

6. Kommunikationssystem gemäß Anspruch 5, wobei
die vorgegebene Regel darin besteht, dass die erste Basisstation (302-1) eine Sequenznummer des Zugriffsstratum-Datenpakets eines vorherigen Dienstdatenpakets oder eines vorherigen M-ten Dienstdatenpakets, ausgehend vom Synchronisierungsdatenpaket, an die zweite Basisstation (302-2) sendet, wobei M eine positive ganze Zahl größer als 1 ist; oder
die vorgegebene Regel darin besteht, dass die erste Basisstation (302-1) eine Sequenznummer des Zugriffsstratum-Datenpakets eines ersten Dienstdatenpakets oder eines N-ten Dienstdatenpakets, das auf das Synchronisierungsdatenpaket folgt, an die zweite Basisstation (302-2) sendet, wobei N eine positive ganze Zahl größer als 1 ist; oder
die vorgegebene Regel darin besteht, dass die erste Basisstation (302-1) eine Sequenznummer des Synchronisierungsdatenpakets an die zweite Basisstation (302-2) sendet.

7. Kommunikationssystem gemäß einem der Ansprüche 5 bis 6, wobei
das Synchronisierungsdatenpaket ein Datenpaket des General Packet Radio Service Tunnel Protocol (GTP) im User Plane ist und ein Header des GTP User Plane Datenpakets anzeigt, dass das GTP User Plane Datenpaket ein Synchronisierungsdatenpaket ist.

8. Kommunikationssystem gemäß einem der Ansprüche 1-7, wobei
die zweite Basisstation sendet (S612') eine dritte Anforderungsnachricht an das Kernnetz, wobei die dritte Anforderungsnachricht dazu dient, die Deaktivierung oder Stornierung des Bi-Casting-Modus anzufordern, oder die dritte Anforderungsnachricht dazu dient, vom Kernnetz (303) zu verlangen, dass für die zweite Basisstation ein Unicasting-Modus verwendet wird.

9. Kommunikationssystem gemäß einem der Ansprüche 1-7, wobei
Die erste Basisstation sendet (S612) eine vierte Anforderungsnachricht an das Kernnetz (303), wobei die vierte Anforderungsnachricht dazu dient, den Bi-Casting-Modus zu deaktivieren oder abzubrechen, oder die vierte Anforderungsnachricht das Kernnetz (303) auffordert, einen Unicasting-Modus für die erste Basisstation zu verwenden.

10. Kommunikationssystem nach einem der Ansprüche 1 bis 9, wobei
das Kernnetz (303) eine Zugangsverwaltungsfunktion (AMF) und eine Nutzer-Ebenen-Funktion (UPF) umfasst;
dass die erste Basisstation die erste Anforderungsnachricht an das Kernnetz sendet, umfasst:
die erste Basisstation (302-1) sendet (S604) die erste Anforderungsnachricht an die AMF-Einheit; und
die AMF-Einheit sendet (S605) eine erste Nachricht an die UPF-Einheit, wobei die erste Nachricht dazu dient, das Senden eines Datenpakets im Bi-Casting-Modus anzufordern;
dass das Kernnetz ein oder mehrere Datenpakete im Bi-Casting-Modus an die erste und die zweite Basisstation sendet, umfasst:
die UPF-Einheit sendet (S606) ein oder mehrere Datenpakete im Bi-Casting-Modus an die erste Basisstation (302-1) und die zweite Basisstation (302-2);
dass die zweite Basisstation die dritte Anforderungsnachricht an das Kernnetz sendet, umfasst:
die zweite Basisstation (302-2) sendet (S612') die dritte Anforderungsnachricht an die AMF-Einheit oder
dass die erste Basisstation die vierte Anforderungsnachricht an das Kernnetz sendet, umfasst:
die erste Basisstation (302-1) sendet (S612) die vierte Anforderungsnachricht an die AMF-Einheit.

## Revendications

1. Un système de communication comprenant une première station de base (302-1), une deuxième station de base (302-2), et un réseau central (303), dans lequel
la première station de base (302-1) est configurée pour envoyer (S604) un premier message de requête au réseau central (303), ledit premier message de requête servant à demander l'envoi d'un paquet de données en mode bi-diffusion, et le mode bi-diffusion étant un mode de transmission dans lequel le réseau central (303) envoie un même paquet de données à la première station de base (302-1) et à la deuxième station de base (302-2) ; et
le réseau central (303) est configuré pour : après réception du premier message de requête, envoyer (S606) un ou plusieurs paquets de données à la première station de base (302-1) et à la deuxième station de base (302-2) en mode bi-diffusion,
**caractérisé en ce que** la première station de base (302-1) et la deuxième station de base (302-2) sont deux stations de base dans un réseau actif-de réserve, la première station de base étant en mode actif et la deuxième station de base en mode réserve.

2. Le système de communication selon la revendication 1, dans lequel, avant que la première station de base n'envoie le premier message de requête au réseau central,
la première station de base (302-1) est en outre configurée pour envoyer (S602) un deuxième message de requête à la deuxième station de base (302-2), ledit deuxième message de requête servant à demander des informations de la couche réseau de transport pour la bi-diffusion ; et
en réponse au deuxième message de requête, la deuxième station de base (302-2) est configurée pour envoyer (S304) les informations de la couche réseau de transport pour la bi-diffusion à la première station de base (302-1).

3. Le système de communication selon la revendication 2, dans lequel
le deuxième message de requête comprend une première information d'indication, ladite première information d'indication indiquant au réseau central (303) d'envoyer un paquet de données en mode bi-diffusion.

4. Le système de communication selon la revendication 3, dans lequel
le premier message de requête comprend une deuxième information d'indication, un identifiant de la deuxième station de base, ainsi que les informations de la couche réseau de transport pour la bi-diffusion, ladite deuxième information d'indication indiquant au réseau central (303) d'envoyer un paquet de données en mode bi-diffusion.

5. Le système de communication selon l'une quelconque des revendications 1 à 4, dans lequel
le ou les paquets de données comprennent un paquet de données de service et un paquet de données de synchronisation ; et
la première station de base (302-1) et la deuxième station de base (302-2) déterminent un même numéro de séquence de paquet de données de la couche d'accès pour un même paquet de données de service sur la base du paquet de données de synchronisation et d'une règle prédéfinie,
dans laquelle la première station de base (302-1) et la seconde station de base (302-2) déterminent le même numéro de séquence de paquet de données de la couche d'accès pour un même paquet de données de service sur la base du paquet de données de synchronisation et d'une règle prédéfinie, ce qui comprend :
la première station de base (302-1) détermine les numéros de séquence des paquets de données de la couche d'accès des paquets de données de service reçus par la première station de base depuis le réseau central (303), et envoie (S607) l'un des numéros de séquence de paquet de données de la couche d'accès déterminés à la seconde station de base sur la base du paquet de données de synchronisation et de la règle prédéfinie ; et
la seconde station de base (302-2) détermine (S608), sur la base du paquet de données de synchronisation, de la règle prédéfinie et du numéro de séquence de paquet de données de la couche d'accès reçu de la première station de base, un numéro de séquence de paquet de données de la couche d'accès pour un paquet de données de service reçu par la seconde station de base du réseau central (303).

6. Système de communication selon la revendication 5, dans lequel
la règle prédéfinie est que la première station de base (302-1) envoie à la seconde station de base (302-2) un numéro de séquence de paquet de données de la couche d'accès d'un paquet de données de service précédent ou du M-ième paquet de données de service précédent à partir du paquet de données de synchronisation, M étant un entier positif supérieur à 1 ; ou
la règle prédéfinie est que la première station de base (302-1) envoie à la seconde station de base (302-2) un numéro de séquence de paquet de données de la couche d'accès du premier paquet de données de service ou du N-ième paquet de données de service suivant le paquet de données de synchronisation, N étant un entier positif supérieur à 1 ; ou
la règle prédéfinie est que la première station de base (302-1) envoie le numéro de séquence de paquet de données de la couche d'accès du paquet de données de synchronisation à la seconde station de base (302-2).

7. Système de communication selon l'une quelconque des revendications 5 à 6, dans lequel
le paquet de données de synchronisation est un paquet de données du plan utilisateur GTP (General Packet Radio Service Tunnel Protocol), et l'en-tête du paquet de données du plan utilisateur GTP indique que ce paquet est un paquet de données de synchronisation.

8. Système de communication selon l'une quelconque des revendications 1 à 7, dans lequel
la seconde station de base envoie (S612') un troisième message de requête au réseau central, le troisième message de requête servant à demander la désactivation ou l'annulation du mode de diffusion double, ou le troisième message de requête sert à demander au réseau central (303) d'utiliser un mode de diffusion unique pour la seconde station de base.

9. Système de communication selon l' une quelconque des revendications 1 à 7, dans lequel
la première station de base envoie (S612) un quatrième message de demande au réseau central (303), où le quatrième message de demande vise à demander la désactivation ou l'annulation du mode bi-diffusion, ou le quatrième message de demande vise à demander au réseau central (303) d'utiliser un mode unidiffusion pour la première station de base.

10. Le système de communication selon l'une quelconque des revendications 1 à 9, dans lequel
le réseau central (303) comprend une entité fonction de gestion d'accès AMF et une entité fonction de plan utilisateur UPF ;
le fait que la première station de base envoie le premier message de demande au réseau central comprend :
la première station de base (302-1) envoie (S604) le premier message de demande à l'entité AMF ; et
l'entité AMF envoie (S605) un premier message à l'entité UPF, où le premier message vise à demander l'envoi d'un paquet de données en mode bi-diffusion ;
le fait que le réseau central envoie un ou plusieurs paquets de données à la première station de base et à la seconde station de base en mode bi-diffusion comprend :
l'entité UPF envoie (S606) le ou les paquets de données à la première station de base (302-1) et à la seconde station de base (302-2) en mode bi-diffusion ;
le fait que la seconde station de base envoie le troisième message de demande au réseau central comprend :
la seconde station de base (302-2) envoie (S612') le troisième message de demande à l'entité AMF ou
le fait que la première station de base envoie le quatrième message de demande au réseau central comprend :
la première station de base (302-1) envoie (S612) le quatrième message de demande à l'entité AMF.
